(19) Europäisches Patentamt
European Patent Office
Office européen des brevets

(11) EP 4 711 796 A1

(12) **EUROPEAN PATENT APPLICATION**
published in accordance with Art. 153(4) EPC

(43) Date of publication:
**18.03.2026 Bulletin 2026/12**

(21) Application number: **24803752.5**

(22) Date of filing: **09.05.2024**

(51) International Patent Classification (IPC):
***G01S 5/02*** *(2010.01)* ***H04W 4/40*** *(2018.01)*

(52) Cooperative Patent Classification (CPC):
**G01S 5/02; H04W 4/40**

(86) International application number:
**PCT/KR2024/006286**

(87) International publication number:
**WO 2024/232699 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.05.2023 KR 20230059860**

(71) Applicant: **LG Electronics Inc.**
**Yeongdeungpo-gu**
**Seoul 07336 (KR)**

(72) Inventors:
- **HWANG, Jaeho**
**Seoul 06772 (KR)**
- **KO, Woosuk**
**Seoul 06772 (KR)**
- **SEO, Hanbyul**
**Seoul 06772 (KR)**

(74) Representative: **Maikowski & Ninnemann**
**Patentanwälte Partnerschaft mbB**
**Postfach 15 09 20**
**10671 Berlin (DE)**

# (54) METHOD FOR MEASURING POSITION IN WIRELESS COMMUNICATION SYSTEM AND APPARATUS THEREFOR

(57) Disclosed are a method by which a terminal measures a position in a wireless communication system and an apparatus therefor according to various embodiments. Disclosed are: a method comprising the steps of measuring a first position of the terminal by means of first time of arrival (ToA) positioning that uses a plurality of anchors, estimating a second position of the terminal on the basis of the amount of change in the position of the terminal since the measurement of the first position, and measuring a third position of the terminal by conducting second ToA positioning using two or more anchors, the number of which being reduced from the number of the plurality of anchors; and an apparatus therefor.

FIG. 17

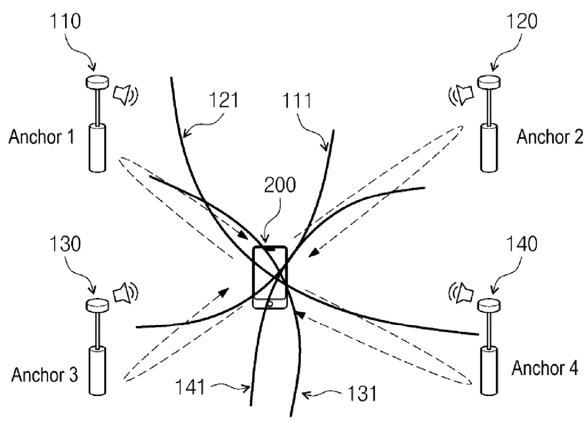


EP 4 711 796 A1

## Description

### TECHNICAL FIELD

The present disclosure relates to a method of measuring a position by a user equipment (UE) in a wireless communication system and an apparatus for the same.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

## DISCLOSURE

### TECHNICAL PROBLEM

The object of the present disclosure is to provide a method of measuring a position by a user equipment (UE) accurately and efficiently in a wireless communication system and an apparatus for the same.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

In an aspect of the present disclosure, provided herein is a method of measuring a position by a user equipment (UE) in a wireless communication system. The method may include: measuring a first position of the UE through first Time of Arrival (ToA) positioning using a plurality of anchors; estimating a second position of the UE based on a position change amount of the UE after the measurement of the first position; and measuring a third position of the UE by performing second ToA positioning using two or more anchors fewer than the plurality of anchors. The two or more anchors may be selected from among the plurality of anchors based on an angle between two anchors centered on the second position of the UE.

Alternatively, based on that a number of the two or more anchors is two, the two or more anchors may be selected as two anchors having an angle closest to a first specific threshold angle among the plurality of anchors.

Alternatively, the first specific threshold angle may be set to 90 degrees such that an error of an intersection of circles between the two anchors and the UE is minimized.

Alternatively, based on that a number of the two or more anchors is three, the two or more anchors may be selected as remaining anchors obtained by excluding, from the plurality of anchors, one anchor of two anchors having an angle farthest from a second specific threshold angle among the plurality of anchors, and the second specific threshold angle may be 120 degrees.

Alternatively, the UE may select the two or more anchors from among the plurality of anchors by further considering a channel environment for each of the plurality of anchors.

Alternatively, the method may further include: transmitting the first position of the UE to one anchor among the plurality of anchors; and receiving, from the one anchor, map information on two or more anchors selectable for each geographic area among the plurality of anchors.

Alternatively, the position change amount may be calculated using an inertial measurement unit (IMU) sensor.

Alternatively, based on that two or more positions are calculated through the second ToA positioning, the third position of the UE may be determined as a position closest to the second position among the two or more positions.

In another aspect of the present disclosure, provided herein is a computer-readable recording medium having recorded thereon a program for executing the above-described method of measuring a position.

In another aspect of the present disclosure, provided herein is a UE configured to perform the above-described method of measuring a position.

In another aspect of the present disclosure, provided herein is a processing device configured to control a UE that performs the above-described method of measuring a position.

In another aspect of the present disclosure, provided herein is a method of measuring a position of a UE by a network in a wireless communication system. The method may include: receiving a first position of the UE measured through first ToA positioning using a plurality of anchors; determining two or more anchors fewer than the plurality of anchors for each geographic area; and transmitting map information on the two or more anchors determined for each geographic area to the UE. The two or more anchors may be determined from among the plurality of anchors based on an angle between two anchors centered on an arbitrary position within the geographic area.

In another aspect of the present disclosure, provided herein is a computer-readable recording medium having recorded thereon a program for executing the above-described method of measuring a position of a UE.

In another aspect of the present disclosure, provided herein is a network configured to perform the above-described method of measuring a position of a UE.

In a further aspect of the present disclosure, provided herein is a processing device configured to control a network that performs the above-described method of measuring a position of a UE.

## ADVANTAGEOUS EFFECTS

According to an embodiment, the position of a user equipment (UE) may be accurately and efficiently measured in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

## BRIEF DESCRIPTION OF THE DRAWINGS

The accompanying drawings, which are included to provide a further understanding of the present disclosure and are incorporated in and constitute a part of this application, illustrate embodiments of the present disclosure and together with the description serve to explain the principle of the present disclosure.

FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 shows a communication structure providable in a 6G system, based on an embodiment of the present disclosure.
FIG. 7 shows an electromagnetic spectrum, based on an embodiment of the present disclosure.
FIG. 8 shows an example of an NTN typical scenario based on a transparent payload, based on an embodiment of the present disclosure.
FIG. 9 shows an example of an NTN typical scenario based on a regenerative payload, based on an embodiment of the present disclosure.
FIG. 10 shows an example of a sensing operation, based on an embodiment of the present disclosure.
FIG. 11 illustrates a radio protocol architecture for SL communication.
FIG. 12 illustrates UEs performing V2X or SL communication.
FIG. 13 illustrates resource units for V2X or SL communication.
FIG. 14 shows an example of a BWP, based on an embodiment of the present disclosure.
FIG. 15 shows a procedure of performing V2X or SL communication by a UE based on a resource allocation mode, based on an embodiment of the present disclosure.
FIG. 16 is a diagram illustrating an observed time difference of arrival (OTDOA) positioning method, to which the embodiment is applicable.
FIGS. 17 and 18 are diagrams for explaining a method in which a UE performs Time of Arrival (ToA) positioning using a plurality of anchors.
FIGS. 19 and 20 are diagrams for explaining a method in which a UE reduces the number of anchors for positioning.
FIG. 21 is a diagram for explaining a method in which a UE selects anchors by considering a channel environment between the UE and the anchors.
FIG. 22 is a diagram for explaining a method of performing ToA positioning between a UE and anchors.
FIG. 23 is a diagram for explaining a method in which a UE measures a position based on ToA.
FIG. 24 is a diagram for explaining a method in which a network measures the position of a UE.
FIG. 25 illustrates a communication system applied to the present disclosure.
FIG. 26 illustrates wireless devices applicable to the present disclosure.
FIG. 27 illustrates another example of a wireless device to which the present disclosure is applied.
FIG. 28 illustrates a vehicle or an autonomous driving vehicle applied to the present disclosure.

## DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node BS (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2), and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

FIG. 6 shows a communication structure providable in a 6G system, based on an embodiment of the present disclosure. The embodiment of FIG. 6 may be combined with various embodiments of the present disclosure.

In 6G, new network characteristics may be as follows.

- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.

- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

Core implementation technology of 6G system is described below.

- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.

Terahertz (THz) communication: A data rate may increase by increasing bandwidth. This may be performed by using sub-TH communication with wide bandwidth and applying advanced massive MIMO technology. THz waves, which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity to RF.

FIG. 7 shows an electromagnetic spectrum, based on an embodiment of the present disclosure. The embodiment of FIG. 7 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.

- Non-terrestrial networks (NTN): An NTN may refer to a network or a network segment that utilizes radio frequency (RF) resources aboard a satellite (or an unmanned aerial system (UAS) platform). FIG. 8 shows an example of an NTN typical scenario based on a transparent payload, based on an embodiment of the present disclosure. FIG. 9 shows an example of an NTN typical scenario based on a regenerative payload, based on an embodiment of the present disclosure. The embodiment of FIG. 8 or FIG. 9 may be combined with various embodiments of the present disclosure. Referring to FIG. 8, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 9, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGS. 8 and 9 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.

- Integrated sensing and communication (ISAC): Wireless sensing is a technology enabler to acquire information about characteristics of the environment and/or objects within the environment that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 10 shows an example of a sensing operation, based on an embodiment of the present disclosure. The embodiment of FIG. 10 may be combined with various embodiments of the present disclosure. Specifically, (a) of FIG. 10 shows an example of sensing (e.g., monostatic sensing) with co-located sensing receiver and sensing transmitter, and (b) of FIG. 10 shows an example of sensing (e.g., bistatic sensing) with separated sensing receiver and sensing transmitter.

FIG. 11 illustrates a radio protocol architecture for SL communication. Specifically, FIG. 11-(a) shows a user plane protocol stack of NR, and FIG. 11-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

FIG. 12 illustrates UEs performing V2X or SL communication.

Referring to FIG. 12, in V2X or SL communication, the term UE may mainly refer to a user' s UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 13 illustrates resource units for V2X or SL communication.

Referring to FIG. 13, the frequency resources of a resource pool may be divided into NF sets, and the time resources of the resource pool may be divided into NT sets. Accordingly, a total of NF * NT resource units may be defined in the resource pool. FIG. 13 shows an exemplary case where the resource pool is repeated with a periodicity of NT subframes.

As shown in FIG. 13, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.

(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.

(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.

(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

FIG. 14 shows an example of a BWP, based on an embodiment of the present disclosure. The embodiment of FIG. 14 may be combined with various embodiments of the present disclosure. It is assumed in the embodiment of FIG. 14 that the number of BWPs is 3.

Referring to FIG. 14, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}{}_{BWP}$ from the point A, and a bandwidth $N^{size}{}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

FIG. 15 shows a procedure of performing V2X or SL communication by a UE based on a resource allocation mode, based on an embodiment of the present disclosure. The embodiment of FIG. 15 may be combined with various embodiments of the present disclosure.

Referring to (a) of FIG. 15, in a resource allocation mode 1, a base station may schedule SL resource(s) to be used by a UE for SL transmission. For example, in step S1500, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S1510, the first UE may transmit a PSCCH (e.g., sidelink control information (SCI) or 1st-stage SCI) to a second UE based on the resource scheduling. In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE. For example, HARQ feedback information (e.g., NACK information or ACK information) may be received from the second UE through the PSFCH. In step S1540, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 15, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S1510, a first UE which has selected resource(s) from a resource pool by itself may transmit a PSCCH (e.g., sidelink control information (SCI) or 1st-stage SCI) to a second UE by using the resource(s). In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE.

Referring to (a) or (b) of FIG. 15, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI, or a 2nd-stage SCI format.

Referring to (a) or (b) of FIG. 15, in step S1530, the first UE may receive the PSFCH. For example, the first UE and the second UE may determine a PSFCH resource, and the second UE may transmit HARQ feedback to the first UE using the PSFCH resource.

Referring to (a) of FIG. 15, in step S1540, the first UE may transmit SL HARQ feedback to the base station through the PUCCH and/or the PUSCH.

The sidelink described above may be defined as communication between UEs or direct communication between UEs. In this case, the PSCCH may be defined as a physical control channel for communication between UEs, the PSSCH may be defined as a physical data channel or physical shared channel for communication between UEs, and the PSFCH may be defined as a physical feedback transmission channel between UEs.

OTDOA (Observed Time Difference of Arrival)

FIG. 16 is a diagram illustrating an observed time difference of arrival (OTDOA) positioning method, to which the embodiment is applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTDi_{,1}=\frac{\sqrt{(x_t-x_i)^2+(y_t-y_i)^2}}{c}-\frac{\sqrt{(x_t-x_1)^2+(y_t-y_1)^2}}{c}+(T_i-T_1)+(n_i-n_1)$$

In Equation 1, c is the speed of light, {xt, $y_t$} are (unknown) coordinates of a target UE, {$x_i$, $y_i$} are (known) coordinates of a TP, and {$x_1$, $y_1$} are coordinates of a reference TP (or another TP). Here, ($T_i$-$T_1$) is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io
- E-UTRAN measurement: ng-eNB Rx-Tx time difference, timing advance (TADV), and/or AoA

Here, TADV may be divided into Type 1 and Type 2 as follows.

$$T_{ADV}\text{ Type 1} = (\text{ng-eNB Rx-Tx time difference})+(\text{UE E-UTRA Rx-Tx time difference})$$

TADV Type 2 = ng-eNB Rx-Tx time difference

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

**ToA positioning operation method according to UE position**

In the case of a conventional ToA positioning technique, a UE may calculate a (relative) distance with each of four anchors/anchor nodes (hereinafter, anchors) through bidirectional communication based on the four anchors. The UE may determine/calculate the position thereof based on the four (relative) distances calculated for the four anchors. For example, the UE may transmit a signal related to positioning to each of the four anchors, and the four anchors may transmit a response signal to the UE after a preconfigured time interval from the time of receiving the signal. The UE may measure/calculate the distance with each anchor based on a time difference between the transmission time of the signal and the response signal and the preconfigured time interval. For example, the UE may estimate a time taken for a signal to make a round trip between the corresponding anchor and the UE, based on a round-trip time, which is a time obtained by subtracting the preconfigured time interval from the time difference between the transmission time of the signal and the response signal. The UE may measure the distance between the anchor and the UE based on the round-trip time and the signal speed.

However, the above-described ToA positioning is a technique based on bidirectional communication between UEs and anchors. Thus, as the number of operating UEs increases, an overload may occur in the communication links between the anchors and the UEs, and the positioning performance of the UE may deteriorate due to the overload of the communication links.

Therefore, a method for alleviating/minimizing the overload of the communication links in ToA positioning needs to be proposed. Hereinafter, a method for alleviating/minimizing the overload of the communication links in ToA positioning will be described in detail.

FIGS. 17 and 18 are diagrams for explaining a method in which a UE performs ToA positioning using a plurality of anchors.

Referring to FIG. 17, a UE 200 may measure a (relative) distance with each of four anchors 110, 120, 130, and 140 through signal exchange with the anchors and calculate/measure the position thereof based on the (relative) distance with each anchor. For example, the UE 200 may measure a first distance to anchor 1 110 based on a signal transmission time for anchor 1 110 and a reception time of a response signal from anchor 1 110 and calculate a concentric circle 111 centered on anchor 1 110 with the first distance as a radius. Similarly, the UE 200 may calculate concentric circles 121, 131, and 141 based on the distances calculated through signal exchange with each of anchor 2 120, anchor 3 130, and anchor 4 140, and the positions of the anchors. The UE may calculate/measure the position thereof based on intersections among the concentric circles 111, 121, 131, and 141. Meanwhile, the UE may be provided in advance with the position of each of the anchors as configuration information related to the ToA positioning.

For positioning according to the above method, the UE 200 needs to perform bidirectional communication for positioning with all anchors periodically based on a specific period to measure the (relative) distance with each anchor. Since this method uses channel resources for transmitting and receiving signals with all anchors, when the number of UEs performing positioning is large, not only does the load on the communication channel significantly increase, but the UE may also experience excessive processing load for signal transmission/reception with many anchors and for signal processing procedures required for positioning.

For example, referring to FIG. 18(a), for positioning according to the ToA method, a UE or device needs to transmit a positioning signal to anchor 1 during a time period $t_{1-1}$ and receive a response signal for the signal from anchor 1. The UE or device needs to transmit a positioning signal to anchor 2 during a time period $t_{1-2}$ and receive a response signal for the signal from anchor 2. The UE or device needs to transmit a positioning signal to anchor 3 during a time period $t_{1-3}$ and receive a response signal for the signal from anchor 3. The UE or device needs to transmit a positioning signal to anchor 4 during a time period $t_{1-4}$ and receive a response signal for the signal from anchor 4. Furthermore, since the ToA-based positioning is performed periodically, the UE also needs to transmit a signal to each anchor and receive a response signal during each of time periods $t_{2-1}$, $t_{2-2}$, $t_{2-3}$, and $t_{2-4}$.

In order to solve the overload of the communication links and the overload of the UE, a method of reducing the number of anchors for ToA positioning based on predetermined conditions may be considered. For example, when the UE measures a position using three or four anchors, the UE may reduce the number of anchors for ToA positioning based on the measured position of the UE and a movement amount or a position change amount (a movement/position change amount from the time of position measurement to the present time) acquired through an inertial measurement unit (IMU) sensor of the UE.

Specifically, referring to FIG. 18(b), a UE performing initial position measurement may measure/calculate the position thereof through signal transmission and reception $t_{11}$, $t_{12}$, $t_{13}$, and $t_{14}$ with each of four anchors based on the conventional ToA positioning method. Subsequently, the UE may gradually reduce the number of anchors for ToA positioning, for example, by measuring the position using three anchors $t_{21}$, $t_{22}$, and $t_{23}$ according to a channel condition or an operation method (e.g., operation of a sensor such as an IMU) and then measuring the position using two anchors $t_{31}$ and $t_{32}$.

Meanwhile, the reason for using four anchors in the initial position measurement is to resolve ambiguity of the coordinate value on the Z-axis (height/altitude). When the coordinate values for three axes including the Z-axis are calculated by using four anchors in the initial position measurement, the UE (or vehicle) may sufficiently perform position measurement with only three anchors since mobility change along the Z-axis is relatively small.

As described above, according to the proposed disclosure, the number of anchors used for positioning in each time period may be reduced, thereby providing a position calculation service for more UEs based on reduction of the load on communication links/channels. Furthermore, the length of the position measurement time period/position measurement cycle may be reduced by reducing the number of anchors used for positioning, and thus, real-time positioning may also be possible. For example, even if two intersection points for the Z-axis occur when the UE uses three anchors, the UE may select an intersection point closer to a previously measured Z-axis value among the two intersection points.

Furthermore, the UE may perform not only a positioning method using three anchors but also a positioning method using two anchors if the UE is capable of obtaining movement/position changes through the IMU sensor. For example, when using two anchors, the UE may identify an intersection point corresponding to the position of the UE among two intersection points generated on a two-dimensional x-y plane (i.e., intersections between a concentric circle based on a distance to one anchor and a concentric circle based on a distance to the other anchor) based on movement/position changes obtained through the IMU sensor.

According to the proposed disclosure, the number of anchors used in each positioning time period may be reduced based on the above method, thereby reducing the load on communication channels/links and providing a positioning service for more UEs. In addition, the UE may reduce the processing load for positioning by reducing the position measurement time period and the number of signals to be processed for positioning. Thus, the reduction of the time period for positioning may secure real-time capability of positioning compared to the conventional case.

Meanwhile, when the number of anchors used for positioning is reduced from four to three, from four to two, or from three to two, it may not be clear which anchors should be selected. Hereinafter, to address such a problem, a method of selecting anchors in consideration of an angle between two anchors and preconfigured map information is described in detail.

FIGS. 19 and 20 are diagrams for explaining a method in which a UE reduces the number of anchors for positioning.

Referring to FIG. 19(a), when the UE reduces the number of anchors used for positioning from four to three, the UE may select three anchors from among the four anchors based on an angle formed by two anchors with respect to the UE.

For example, the UE may estimate/predict the current position thereof by reflecting a movement amount obtained/estimated through the IMU in the position thereof obtained through four anchors. As illustrated in FIG. 19(a), the UE may calculate an angle between two anchors selected from among the four anchors with respect to the estimated/predicted position. Alternatively, the UE may calculate an angle between two anchors with respect to the estimated/predicted position for each combination of two selectable anchors among a plurality of anchors. That is, the UE may calculate angles between all selectable two anchors among the four anchors. The UE may perform fairly accurate position measurement if the UE uses, for ToA positioning, two anchors having an angle closest to 120 degrees among the calculated angles. To this end, the UE may select only one of two anchors (anchor 2 and anchor 4) having the smallest angle or an angle ($\theta^{A24}$) farthest from 120 degrees among the angles between two anchors, thereby selecting three anchors. In this case, the UE may select an anchor that forms an angle closest to 120 degrees with another anchor from anchor 2 or anchor 4. For example, when an angle ($\theta^{A12}$) between anchor 1 and anchor 2 is closer to 120 degrees than an angle ($\theta^{A34}$) between anchor 3 and anchor 4, the UE may select anchor 2 from among anchor 2 and anchor 4. In this case, the UE may perform position measurement based on anchor 1, anchor 2, and anchor 3.

Alternatively, when the positions of the anchors are fixed and regularized, as illustrated in FIG. 19(b), three anchors available for each preconfigured (geographical) area may be defined/mapped in advance. That is, the UE may select the above-described three anchors based on preconfigured map information in which candidate anchors available for each geographical area are predefined. The map information may be provided to the UE together with the positions of the anchors. For example, as illustrated in FIG. 19(b), when the UE is located on a small circle (p), the UE may use anchor 1, anchor 2, and anchor 3, or anchor 1, anchor 3, and anchor 4 based on the map information.

Alternatively, referring to FIG. 20(a), the UE may select two anchors from among four (or three) anchors based on an angle between two anchors centered on the position of the UE, which is estimated/predicted based on the measured position of the UE and a position change amount of the UE measured by the IMU. For example, the UE may predict/estimate the (current) position thereof, i.e., predicted position, based on the position of the UE measured using four (or three) anchors and the position change amount measured through the IMU. As illustrated in FIG. 20(a), the UE may measure the angle between two anchors centered on the predicted position. In this case, when the angle between two anchors is 90 degrees, the intersection between two concentric circles calculated using the two anchors may be positioned as far apart as possible. Thus, if two anchors having an angle close to 90 degrees is selected, the most accurate position measurement may be performed. For example, referring to FIG. 20(a), among candidate combinations of two selectable anchors among four anchors, the UE may select anchor 2 and anchor 4 having an angle ($\theta^{A24}$) closest to 90 degrees with respect to the predicted position.

Alternatively, when the positions of the anchors are fixed and regularized, as illustrated in FIG. 20(b), map information in which two selectable anchors for each preconfigured (geographical) area are defined/mapped may be predefined. The map information may be provided to the UE together with the positions of the anchors. That is, as illustrated in FIG. 20(b), combinations of anchors available for each preconfigured geographical area (i.e., two anchors having an angle closest to 90 degrees) may be predefined. For example, the UE may identify/select two anchors mapped/defined for a geographical area corresponding to the position thereof based on the map information. When the UE is located at a point (p) shown in FIG. 20(b), the UE may select anchor 1 and anchor 2, or anchor 3 and anchor 4.

In order to reduce the computation amount of the UE, a specific anchor among a plurality of anchors may perform an operation of calculating an angle between anchors and an operation of comparing positions on a map. For example, the specific anchor may be a last anchor with which the UE most recently performs transmission and reception of a signal for positioning among the four anchors with which the UE performs positioning. The specific anchor may calculate an angle between anchors (with respect to the position of the UE) based on position information measured from the UE and the positions of surrounding anchors. The specific anchor may generate the map information (a list of anchors) and provide the UE with information on the calculated angle or the map information. Here, a method of calculating the angle and a method of generating the map information may be performed in the same way as described with reference to FIGS. 19 and 20.

As described above, the UE may reduce the number of anchors for positioning through a method of calculating an angle between two anchors while additionally using an IMU or the like. The UE may maintain positioning performance as much as possible even when the number of anchors is reduced through selection of anchors considering angles between the anchors. However, due to changes in the positioning environment, positioning performance using ToA values measured with actual anchors may vary depending on surrounding noise and obstacle conditions. Therefore, the UE needs to select an optimal anchor among candidate anchors according to the channel environment such as received power and multipath conditions (Line-of-Sight (LoS), Non-Line-of-Sight (NLoS)).

Hereinafter, a method in which the UE selects anchors to be used for positioning by additionally considering received power and multipath conditions (LOS, NLOS) is described in detail.

FIG. 21 is a diagram for explaining a method in which a UE selects anchors by additionally considering channel environments with the anchors.

Referring to FIG. 21, the UE may select at least two anchors to be used for positioning from among a plurality of anchors included in an anchor list by considering a channel state with each anchor. In initial or first positioning, the UE may determine the channel state for each anchor through communication with all anchors or four anchors. Each anchor may transmit measurement information on a signal for positioning received from the UE together with a response signal in response to the signal. The UE may transmit the measured position thereof to a last anchor and receive the anchor list and measurement information from the last anchor. The UE may reduce the number of anchors used for ToA positioning by selecting three anchors having good channel states based on the anchor list and measurement information transmitted from the last anchor. For example, the UE may select anchors from the anchor list based on Equation 2 below.

[Equation 2]

$$\mathrm{Anchor}_{Sel} = Sel[\,(\alpha_{device} \cdot m_{device} + \alpha_{anchor} \cdot m_{Anchor})] \in Anchor_{list}$$

FIG. 22 is a diagram for explaining a method of performing ToA positioning between a UE and anchors.

Referring to FIG. 22(a), when the system starts, the UE may generate a message/signal to perform ToA communication with all anchors (S211 and S212). Next, the UE may receive response signals in response to the message/signal from the anchors and perform ToA positioning based thereon (S213). When position measurement of the UE is completed in one cycle (e.g., when positioning using four anchors is completed without reduction of anchors), the UE may receive a response signal/response message (in response to a signal/message for positioning) further including measurement information (measurement information on a channel state between the UE and the anchor) from each anchor in a next measurement period (S214 No and S215). When the UE transmits the signal for positioning (or measurement message) to a last anchor among the anchors in the next measurement period (S214 Yes), the UE may transmit the signal including information on the measured position of the UE to the last anchor (S216). Subsequently, the UE may receive, from the last anchor, an anchor message including an anchor list (or anchor list value) and a measurement value for identifying the channel state between the UE and the anchor (S217). The UE may select at least two anchors to be used for ToA positioning in a subsequent measurement period based on the anchor message (S218).

Referring to FIG. 22(b), when the system starts, an anchor may receive a signal/message for positioning from the UE (S221 and S222). The anchor may calculate/analyze a measurement value for a channel state based on the received signal/message (S223). The anchor may decode the signal/message received from the UE to check whether a field for the position value of the UE is included in the signal/message (S224 and S225). When the signal/message includes the field for the position value of the UE (S225 Yes), the anchor may determine/calculate an optimal anchor list based on the position value of the UE as described with reference to FIGS. 19 and 20 (S226). Subsequently, the anchor may transmit to the UE an anchor message (ToA message, response signal, or response message) including the anchor list and the channel measurement value between the UE and the anchor (S227). Alternatively, when the signal/message does not include the field for the position value of the UE (S225 No), the anchor may transmit only the measurement value to the UE by including the measurement value in the anchor message or response signal (S227).

FIG. 23 is a diagram for explaining a method in which a UE measures a position based on ToA.

Referring to FIG. 23, the UE may measure a first position of the UE through first ToA positioning using a plurality of anchors (S231). For example, as described with reference to FIGS. 17 and 18, the UE may transmit a signal/message for positioning to each of the plurality of anchors. The UE may receive a response signal/response message in response to the signal/message from each anchor. The UE may estimate a relative distance with each anchor based on a transmission timing of the signal/message, a reception timing of the response signal/message, and a preconfigured time interval. Here, the preconfigured time interval may be predefined in relation to positioning, as a time interval between a reception timing of the signal/message for positioning at the anchor and a transmission timing of the response signal/response message in response thereto, as described above. When the UE measures/calculates the relative distance with each of the plurality of anchors, the UE may calculate concentric circles corresponding to the positions and the relative distances of the plurality of anchors. The UE may measure the first position (x, y, z) thereof based on intersections among the concentric circles. As described above, the UE may perform the first ToA positioning through transmission and reception of signals/messages with the plurality of anchors to measure the first position. In this case, the plurality of anchors may consist of three or four anchors.

Next, the UE may estimate a second position of the UE based on a position change amount of the UE after the measurement of the first position (S233). When the first position is measured through the first ToA positioning, the UE may estimate/calculate the position change amount of the UE through an IMU sensor or the like. In this case, the UE may estimate the current position thereof, i.e., the second position, based on the first position and the position change amount. For example, the UE may measure/calculate the position change amount of the UE using a sensor such as an IMU from after a measurement period for the first ToA positioning until before a next measurement period. The UE may estimate the second position, which is the position of the UE in the next measurement period, based on the first position and the position change amount.

Next, the UE may measure a third position of the UE by performing second ToA positioning using two or more anchors fewer than the plurality of anchors (S235). For example, when the position of the UE, i.e., first position, is measured through the first ToA positioning, and when the second position is estimated based on the first position and the position change amount, the UE may reduce the number of anchors to be used for ToA positioning.

For example, the UE may measure the position of the UE through the first ToA positioning using four anchors in initial ToA positioning. Subsequently, the UE may estimate the second position at a predetermined timing based on the measured position and the position change amount. The UE may select two anchors (or three anchors) to be used for the second ToA positioning from among the plurality of anchors (three or four anchors) based on the estimated second position. That is, the UE may reduce the number of anchors to be used for ToA based on the second position. Specifically, as described with reference to FIGS. 19 and 20, the UE may select two or more anchors to be used for the second ToA positioning from among the plurality of anchors based on an angle between two anchors centered on the second position of the UE and a specific threshold angle. Here, the specific threshold angle may be preconfigured based on the number of anchors to be used for the second ToA positioning. For example, as described above, when ToA positioning is performed using two anchors, the specific threshold angle may be set to 90 degrees, and when ToA positioning is performed using three anchors, the specific threshold angle may be set to 120 degrees.

Alternatively, the UE may select two anchors from among the plurality of anchors (four or three anchors) to perform the second ToA positioning. In this case, the UE may calculate an angle between two anchors centered on the second position for each candidate combination/set of two anchors selectable from among the plurality of anchors. The UE may select a candidate combination/set having an angle closest to a first specific threshold angle (e.g., 90 degrees) among angles between candidate combinations/sets and then select two anchors constituting the candidate combination/set as anchors for the second ToA positioning. This is because the closer the angle between two anchors is to 90 degrees, the farther apart the two intersections of two concentric circles calculated for ToA positioning may be located. In this case, the UE may determine the intersection closer to the estimated second position among the two intersections as the position thereof,

Alternatively, the UE may select three anchors from among the plurality of anchors (e.g., four anchors) to perform the second ToA positioning. For example, the UE may calculate an angle between two anchors centered on the second position for each candidate combination/set of two anchors selectable from among the four anchors, i.e., the plurality of anchors. The UE may identify one candidate combination/set having an angle farthest from a second specific threshold angle (e.g., 120 degrees) among angles between the candidate combinations/sets. The UE may select, as three anchors for the second ToA positioning, the remaining anchors obtained by excluding one anchor from the two anchors constituting the identified candidate combination/set. In this case, the one anchor to be excluded from the two anchors included in the candidate combination/set may be determined in consideration of the second specific threshold angle. For example, the plurality of anchors may include a first anchor, a second anchor, a third anchor, and a fourth anchor, and the one candidate combination/set may include the second anchor and the fourth anchor. In this case, the UE may identify an angle closest to the second specific threshold angle (e.g., 120 degrees) among angles between the second anchor and each of the remaining anchors (the first anchor and the third anchor) and angles between the fourth anchor and each of the remaining anchors (the first anchor and the third anchor). For example, when the angle between the second anchor and the first anchor is closest to the second specific threshold angle, the UE may select the second anchor from the one candidate combination/set as an anchor to be used for the second ToA positioning and exclude the fourth anchor from anchors to be used for the second ToA positioning.

Alternatively, the UE may determine the number of two or more anchors to be used for the second ToA positioning as two or three based on a time interval between the first ToA positioning and the second ToA positioning. For example, when the time interval is less than or equal to a preconfigured specific time interval, the UE may determine the number of two or more anchors to be used for the second ToA positioning as two. On the other hand, when the time interval exceeds the preconfigured specific time interval, the UE may determine the number of two or more anchors to be used for the second ToA positioning as three. This is because the longer the time interval, the lower the accuracy of the second position estimation based on the position change amount. Alternatively, the UE may determine the number of two or more anchors to be used for the second ToA positioning as two or three based on angles between two or more anchors. For example, when there is a candidate combination of two anchors selectable from among the plurality of anchors having an angle closest to the first specific threshold angle among the first specific threshold angle and the second specific threshold angle, the UE may determine the number of two or more anchors to be used for the second ToA positioning as two. Alternatively, when there is a candidate combination of two anchors selectable from among the plurality of anchors having an angle closest to the second specific threshold angle among the first specific threshold angle and the second specific threshold angle, the UE may determine the number of two or more anchors to be used for the second ToA positioning as three.

Alternatively, as described with reference to FIGS. 21 and 22, the UE may select two or more anchors to perform the second ToA by considering not only the angle between the two anchors described above but also quality information of each anchor.

Alternatively, as described with reference to FIGS. 19 to 22, the UE may transmit the first position thereof to one anchor (e.g., a last anchor with which transmission and reception of a signal is performed last in the first ToA positioning) among the plurality of anchors used for the first ToA positioning. In this case, the UE may receive, from the one anchor, map information on two or more selectable anchors for each geographical area from among the plurality of anchors. The UE may select two or more anchors defined for a geographical area corresponding to the estimated second position from the map information, as the anchors to be used for the second ToA positioning.

FIG. 24 is a diagram for explaining a method in which a network measures the position of a UE.

Referring to FIG. 24, the network may receive information on a first position of a UE measured through first ToA positioning using a plurality of anchors from a UE (S241). As described with reference to FIGS. 17, 18, and 23, the first position of the UE may be a position calculated/measured based on intersections among concentric circles calculated based on relative distances with the anchors and positions of the anchors through exchange of signals/messages with the plurality of anchors.

Next, for each of a plurality of geographical areas, the network may determine two or more anchors, fewer than the plurality of anchors, within a specific geographical area (area of four anchors), based on reception of a signal/message including the information on the first position (S243). For example, similar to that described with reference to FIGS. 19 to 23, the network may determine the two or more anchors for each geographical area based on an angle between two anchors centered on an arbitrary position within each geographical area.

Next, the network may transmit map information on the two or more anchors determined for each geographical area to the UE (S245). For example, as illustrated in FIGS. 19(b) and 20(b), the network may generate the map information including information on the two or more anchors determined for each of the plurality of geographical areas and transmit the generated map information to the UE. In this case, the UE may select two or more anchors to be used for ToA positioning from among the plurality of anchors based on the map information and a second position.

According to the proposed disclosure, the number of anchors used for ToA positioning may be effectively reduced based on the position of the UE estimated using an inertial sensor and an angle between two anchors. Alternatively, according to the proposed disclosure, anchors to be used for ToA positioning may be selected in consideration of an angle between two anchors, thereby preventing or minimizing a decrease in accuracy of ToA positioning due to a reduction in the number of anchors. Alternatively, according to the proposed disclosure, the number of anchors used for ToA positioning may be reduced, thereby significantly reducing the load on bidirectional communication links for ToA and significantly increasing the maximum number of UEs operable for ToA positioning through reduction of the load on communication links for each UE.

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

FIG. 25 illustrates a communication system applied to the present disclosure.

Referring to FIG. 25, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

FIG. 26 illustrates a wireless device applicable to the present disclosure.

Referring to FIG. 26, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 25.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device 100 or a UE may include the processor(s) 102 connected to the transceiver(s) 106 and the memory(s) 104. The memory(s) 104 may include at least one program capable of performing operations related to the embodiments described with reference to FIGS. 16 to 14.

The processor(s) 102 may measure a first position of the UE through first ToA positioning using a plurality of anchors; estimate a second position of the UE at a specific time based on a position change amount of the UE after the measurement of the first position of the UE; and measure a third position of the UE through second ToA positioning using two or more anchors fewer than the plurality of anchors. Here, the two or more anchors may be selected from among the plurality of anchors based on an angle between two anchors centered on the second position of the UE.

Alternatively, there is provided a processing device configured to control a UE including the processor(s) 102 and the memory(s) 104. The processing device includes: at least one processor; and at least one memory connected to the at least one processor and storing instructions that, when executed by the at least one processor, cause the UE to: measure a first position of the UE through first ToA positioning using a plurality of anchors; estimate a second position of the UE at a specific time based on a position change amount of the UE after the measurement of the first position of the UE; and measure a third position of the UE through second ToA positioning using two or more anchors fewer than the plurality of anchors. Here, the two or more anchors may be selected from among the plurality of anchors based on an angle between two anchors centered on the second position of the UE.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device 200 or a network may include the processor(s) 202 connected to the transceiver(s) 206 and the memory(s) 204. The memory(s) 204 may include at least one program capable of performing operations related to the embodiments described with reference to FIGS. 16 to 25.

For example, the second device 200 or the network may control the transceiver(s) 206 to receive a first position of the UE measured through first ToA positioning using a plurality of anchors; determine two or more anchors fewer than the plurality of anchors for each geographic area; and transmit map information on the two or more anchors determined for each geographic area to the UE. Here, the two or more anchors may be determined from among the plurality of anchors based on an angle between two anchors centered on an arbitrary position within the geographic area.

Alternatively, there is provided a processing device configured to control the network including the processor(s) 202 and the memory(s) 204. The processing device includes: at least one processor; and at least one memory connected to the at least one processor and storing instructions that, when executed by the at least one processor, cause the network to: receive a first position of the UE measured through first ToA positioning using a plurality of anchors; determine two or more anchors fewer than the plurality of anchors for each geographic area; and transmit map information on the two or more anchors determined for each geographic area to the UE. Here, the two or more anchors may be determined from among the plurality of anchors based on an angle between two anchors centered on an arbitrary position within the geographic area.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of wireless devices to which the present disclosure is applied

FIG. 27 illustrates another example of a wireless device applied to the present disclosure. The wireless device may be implemented in various forms according to a use-case/service (refer to FIG. 25)

Referring to FIG. 27, wireless devices 100 and 200 may correspond to the wireless devices 100 and 200 of FIG. 26 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 26. For example, the transceiver(s) 114 may include the one or more transceivers 106 and 206 and/or the one or more antennas 108 and 208 of FIG. 26. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 25), the vehicles (100b-1 and 100b-2 of FIG. 25), the XR device (100c of FIG. 25), the hand-held device (100d of FIG. 25), the home appliance (100e of FIG. 25), the IoT device (100f of FIG. 25), a digital broadcast terminal, a hologram device, a public safety device, an MTC device, a medicine device, a fintech device (or a finance device), a security device, a climate/environment device, the AI server/device (400 of FIG. 25), the BSs (200 of FIG. 25), a network node, etc. The wireless device may be used in a mobile or fixed place according to a use-example/service.

In FIG. 27, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Examples of vehicles or autonomous vehicles to which the present disclosure is applied

FIG. 28 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 28, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 25, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultra-acoustic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology and may be implemented in standards such as LTE Cat NB1 and/or LTE Cat NB2 and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication and is not limited to the above-described names. As an example, ZigBee technology can generate personal area networks (PANs) related to small/low-power digital communication based on various standards such as IEEE 802.15.4 and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the present disclosure should be determined by the appended claims and their legal equivalents, not by the above description, and all changes coming within the meaning and equivalency range of the appended claims are intended to be embraced therein.

INDUSTRIAL APPLICABILITY

The above-described embodiments of the present disclosure are applicable to various mobile communication systems.

## Claims

**1.** A method of measuring a position by a user equipment (UE) in a wireless communication system, the method comprising:

measuring a first position of the UE through first Time of Arrival (ToA) positioning using a plurality of anchors;
estimating a second position of the UE based on a position change amount of the UE after the measurement of the first position; and
measuring a third position of the UE by performing second ToA positioning using two or more anchors fewer than the plurality of anchors,
wherein the two or more anchors are selected from among the plurality of anchors based on an angle between two anchors centered on the second position of the UE.

**2.** The method of claim 1, wherein based on that a number of the two or more anchors is two, the two or more anchors are selected as two anchors having an angle closest to a first specific threshold angle among the plurality of anchors.

**3.** The method of claim 1, wherein the first specific threshold angle is set to 90 degrees such that an error of an intersection of circles between the two anchors and the UE is minimized.

**4.** The method of claim 1, wherein based on that a number of the two or more anchors is three, the two or more anchors are selected as remaining anchors obtained by excluding, from the plurality of anchors, one anchor of two anchors having an angle farthest from a second specific threshold angle among the plurality of anchors, and
wherein the second specific threshold angle is 120 degrees.

**5.** The method of claim 1, wherein the UE selects the two or more anchors from among the plurality of anchors by further considering channel quality measured for each of the plurality of anchors.

**6.** The method of claim 1, further comprising:

transmitting the first position of the UE to one anchor among the plurality of anchors; and
receiving, from the one anchor, map information on two or more anchors selectable for each geographic area among the plurality of anchors.

**7.** The method of claim 1, wherein the position change amount is calculated using an inertial measurement unit (IMU) sensor.

**8.** The method of claim 1, wherein based on that two or more positions are calculated through the second ToA positioning, the third position of the UE is determined as a position closest to the second position among the two or more positions.

**9.** A computer-readable recording medium having recorded thereon a program for executing the method of Claim 1.

**10.** A user equipment (UE) configured to measure a position in a wireless communication system, the UE comprising:

a radio frequency (RF) transceiver; and
a processor connected to the RF transceiver,
wherein the processor is configured to:

control the RF transceiver to measure a first position of the UE through first Time of Arrival (ToA) positioning using a plurality of anchors;
estimate a second position of the UE based on a position change amount of the UE after the measurement of the first position; and
measure a third position of the UE through second ToA positioning using two or more anchors fewer than the plurality of anchors,
wherein the two or more anchors are selected from among the plurality of anchors based on an angle between two anchors centered on the second position of the UE.

**11.** A processing device configured to control a user equipment (UE) measuring a position in a wireless communication system, the processing device comprising:

at least one processor; and
at least one memory connected to the at least one processor and storing instructions that, when executed by the at least one processor, cause the UE to:

measure a first position of the UE through first Time of Arrival (ToA) positioning using a plurality of anchors;
estimate a second position of the UE based on a position change amount of the UE after the measurement of the first position; and

measure a third position of the UE through second ToA positioning using two or more anchors fewer than the plurality of anchors,
wherein the two or more anchors are selected from among the plurality of anchors based on an angle between two anchors centered on the second position of the UE.

**12.** A method of measuring a position of a user equipment (UE) by a network in a wireless communication system, the method comprising:

receiving a first position of the UE measured through first Time of Arrival (ToA) positioning using a plurality of anchors;
determining two or more anchors fewer than the plurality of anchors for each geographic area; and
transmitting map information on the two or more anchors determined for each geographic area to the UE,
wherein the two or more anchors are determined from among the plurality of anchors based on an angle between two anchors centered on an arbitrary position within the geographic area.

**13.** A computer-readable recording medium having recorded thereon a program for executing the method of Claim 12.

**14.** A network configured to measure a position of a user equipment (UE) in a wireless communication system, the network comprising:

a radio frequency (RF) transceiver; and
a processor connected to the RF transceiver,
wherein the processor is configured to:

control the RF transceiver to receive a first position of the UE measured through first Time of Arrival (ToA) positioning using a plurality of anchors;
determine two or more anchors fewer than the plurality of anchors for each geographic area; and
transmit map information on the two or more anchors determined for each geographic area to the UE,
wherein the two or more anchors are determined from among the plurality of anchors based on an angle between two anchors centered on an arbitrary position within the geographic area.

**15.** A processing device configured to control a network measuring a position of a user equipment (UE) in a wireless communication system, the processing device comprising:

at least one processor; and
at least one memory connected to the at least one processor and storing instructions that, when executed by the at least one processor, cause the network to:

receive a first position of the UE measured through first Time of Arrival (ToA) positioning using a plurality of anchors;
determine two or more anchors fewer than the plurality of anchors for each geographic area; and
transmit map information on the two or more anchors determined for each geographic area to the UE,
wherein the two or more anchors are determined from among the plurality of anchors based on an angle between two anchors centered on an arbitrary position within the geographic area.

FIG. 1

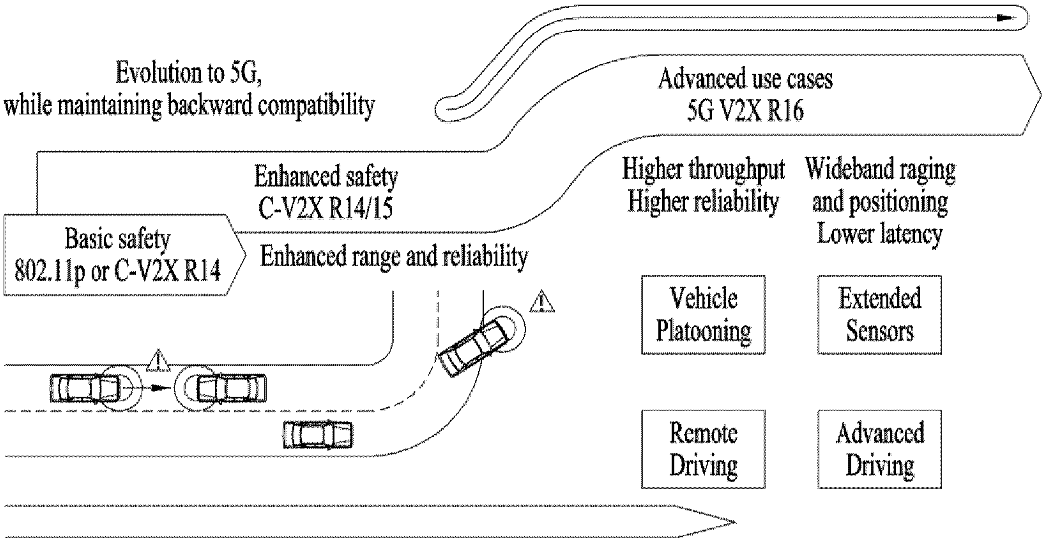
Evolution to 5G,
while maintaining backward compatibility
Advanced use cases
5G V2X R16
Enhanced safety
C-V2X R14/15
Basic safety
802.11p or C-V2X R14
Enhanced range and reliability
Higher throughput
Higher reliability
Wideband raging
and positioning
Lower latency
Vehicle
Platooning
Extended
Sensors
Remote
Driving
Advanced
Driving

FIG. 2

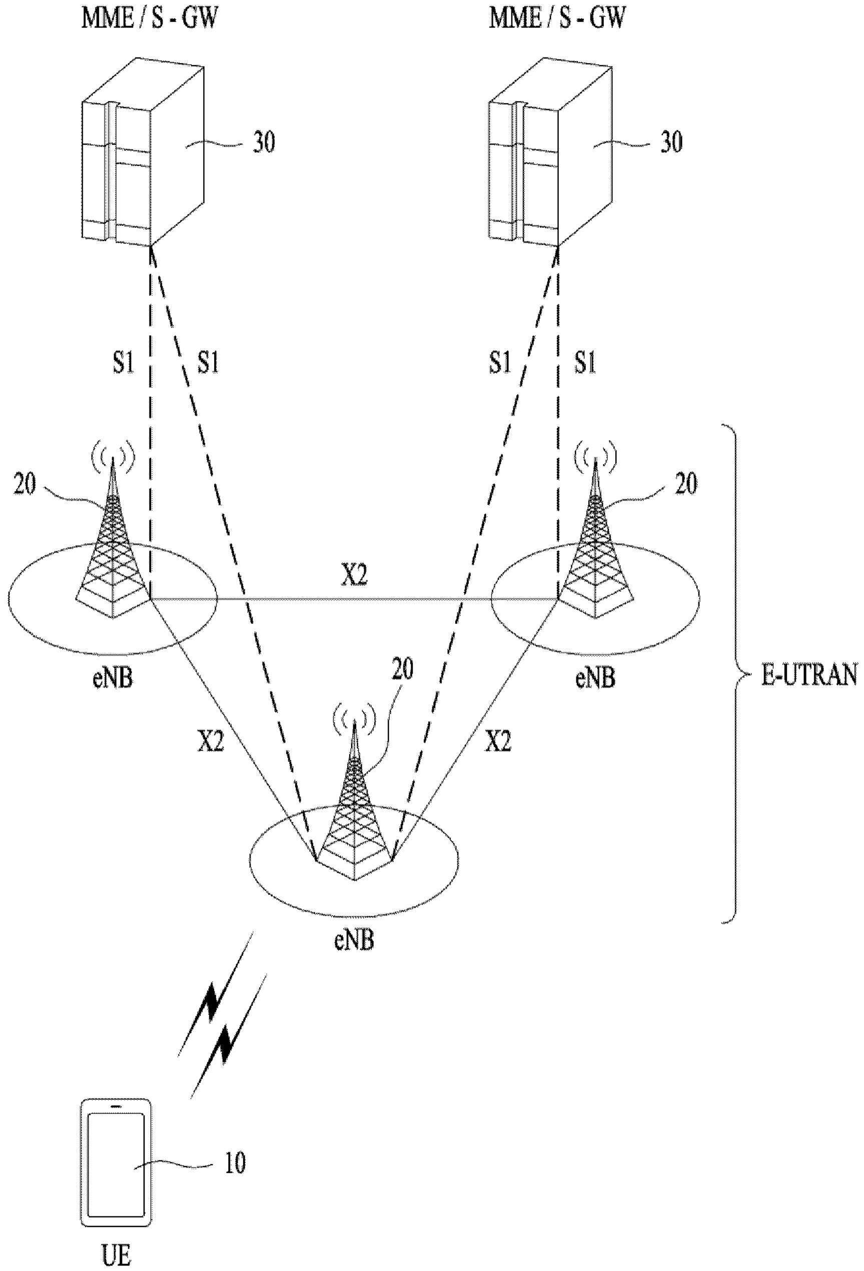
MME / S - GW
MME / S - GW
30
30
S1
S1
S1
S1
20
20
20
X2
X2
X2
eNB
eNB
eNB
E-UTRAN
10
UE

FIG. 3

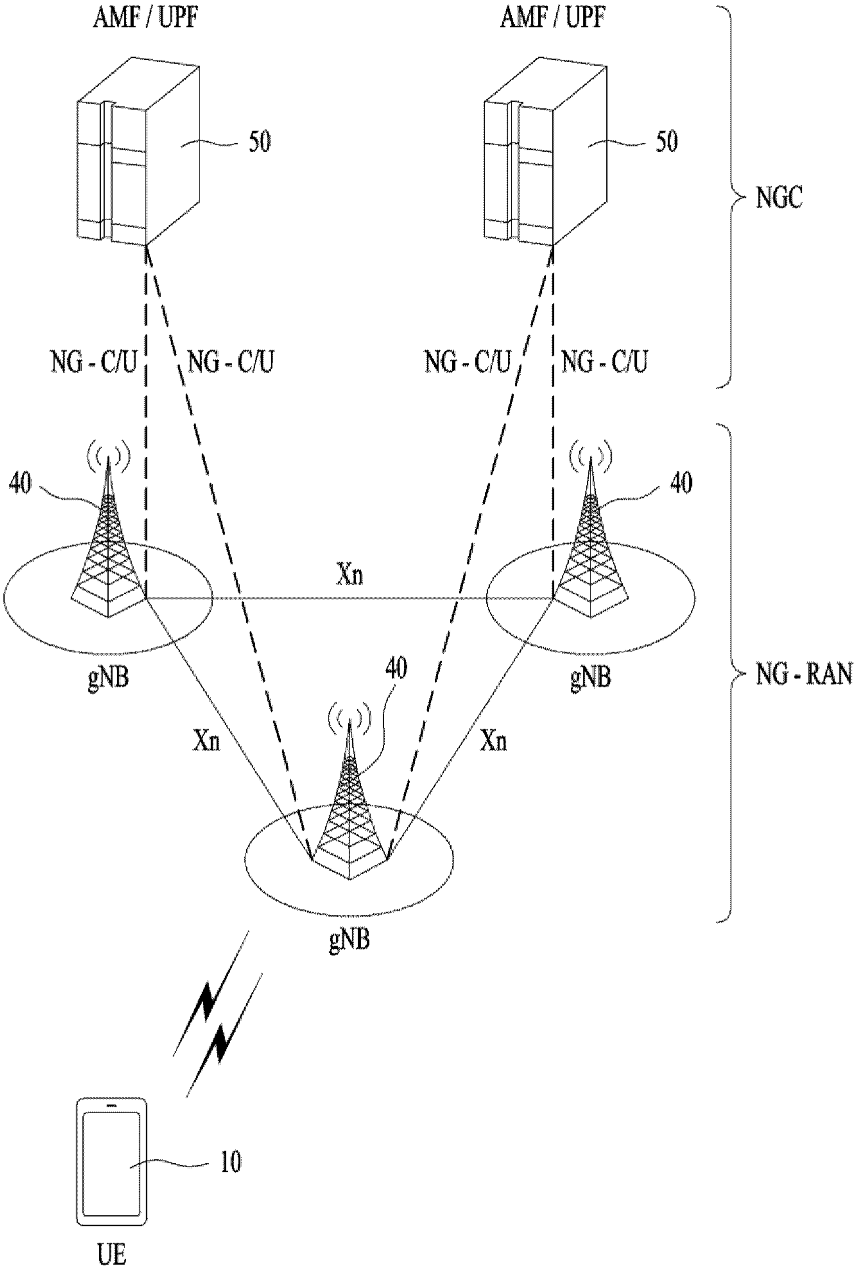
AMF / UPF
50
AMF / UPF
50
NGC
NG - C/U
NG - C/U
NG - C/U
NG - C/U
40
40
Xn
gNB
gNB
40
NG - RAN
Xn
Xn
gNB
10
UE

FIG. 4

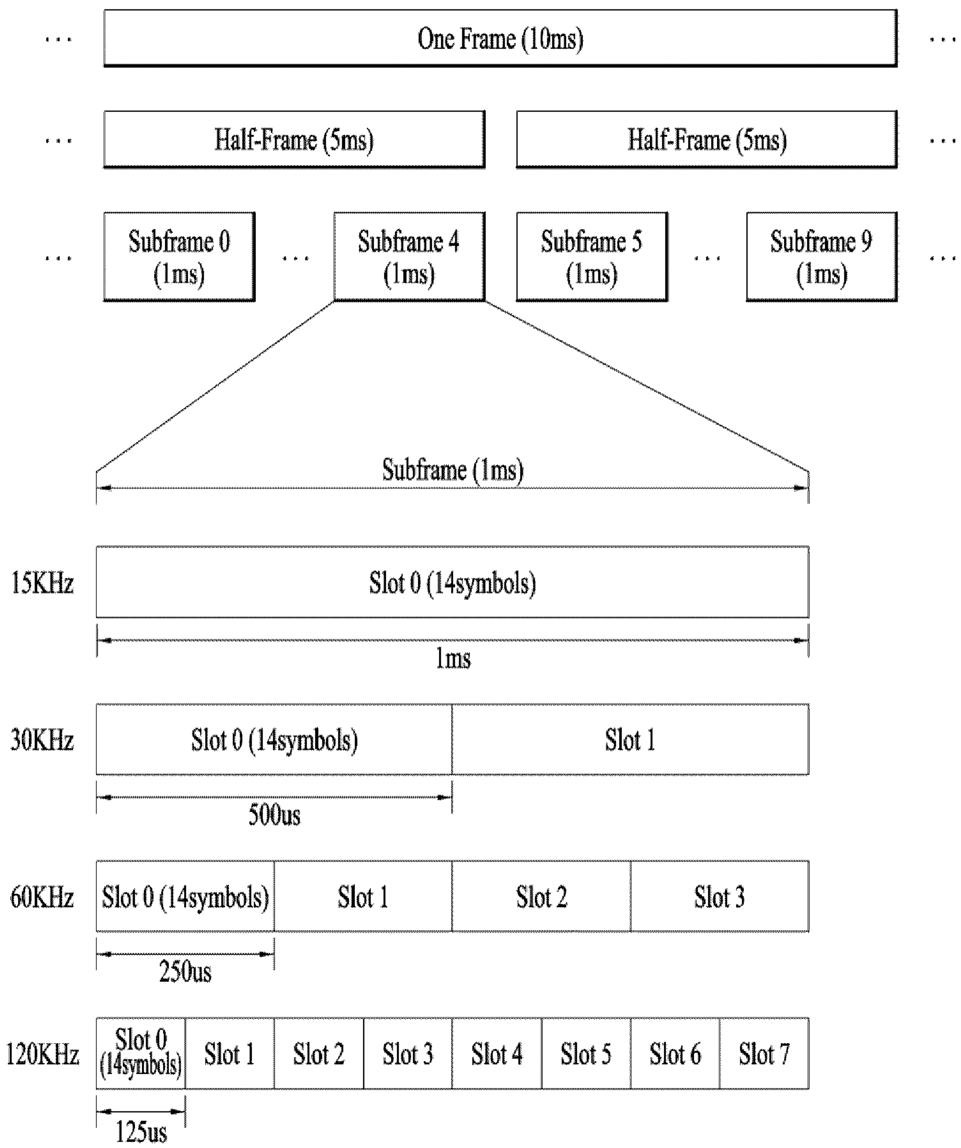
...
One Frame (10ms)
...
Half-Frame (5ms)
Half-Frame (5ms)
Subframe 0 (1ms)
Subframe 4 (1ms)
Subframe 5 (1ms)
Subframe 9 (1ms)
Subframe (1ms)
15KHz
Slot 0 (14symbols)
1ms
30KHz
Slot 0 (14symbols)
Slot 1
500us
60KHz
Slot 0 (14symbols)
Slot 1
Slot 2
Slot 3
250us
120KHz
Slot 0 (14symbols)
Slot 1
Slot 2
Slot 3
Slot 4
Slot 5
Slot 6
Slot 7
125us

FIG. 5

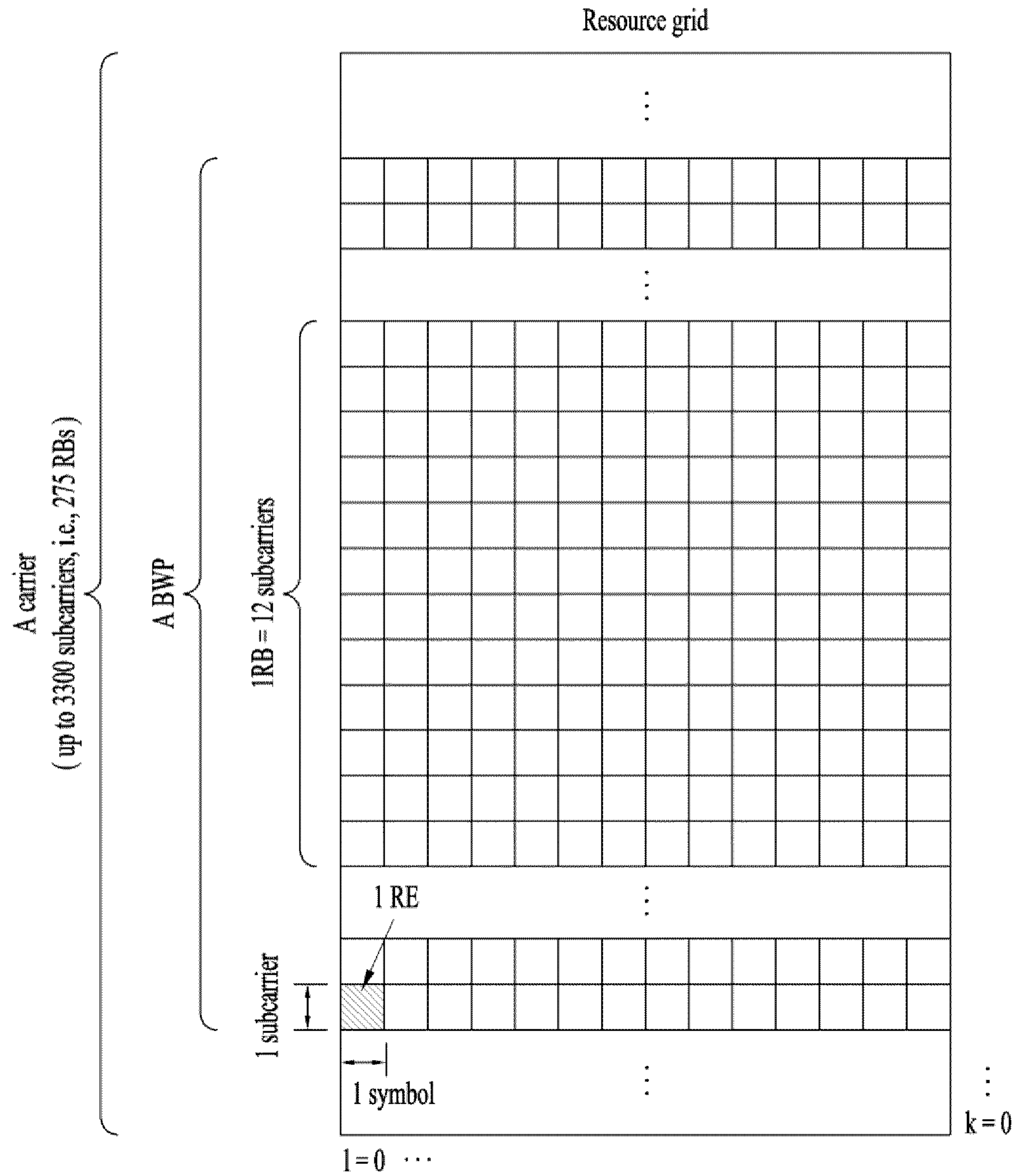
Resource grid
A carrier
( up to 3300 subcarriers, i.e., 275 RBs )
A BWP
1RB = 12 subcarriers
1 RE
1 subcarrier
1 symbol
k = 0
l = 0 ⋯

FIG. 6

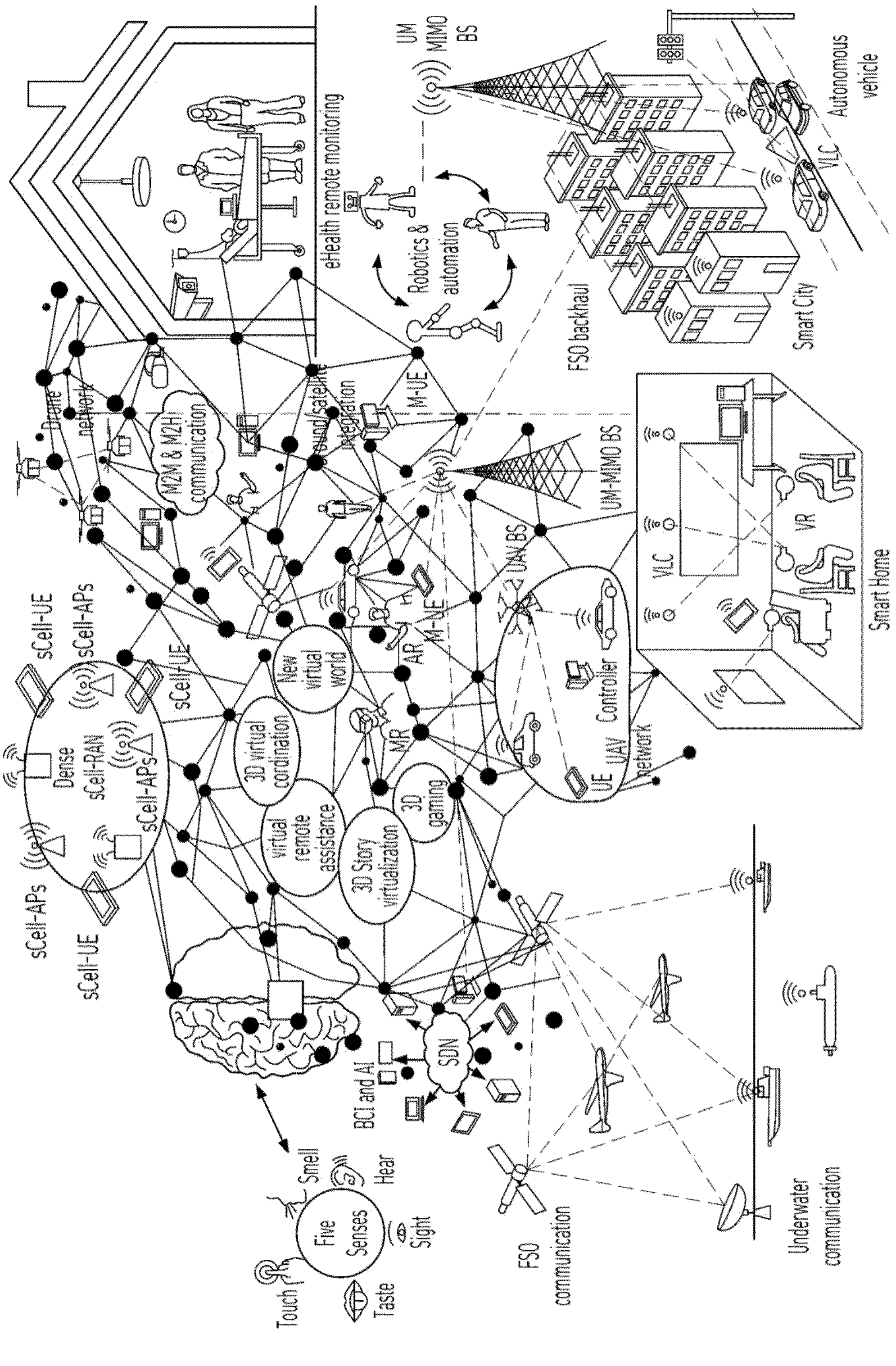

eHealth remote monitoring
UM MIMO BS
Robotics & automation
Autonomous vehicle
VLC
Smart City
FSO backhaul
Drone network
M2M & M2H communication
Ground/satellite integration
M-UE
UM-MIMO BS
UAV BS
Smart Home
VR
VLC
sCell-UE
sCell-APs
sCell-UE
Dense sCell-RAN
sCell-APs
sCell-APs
sCell-UE
New virtual world
AR
M-UE
3D virtual cordination
MR
Controller
UAV network
UE
virtual remote assistance
3D Story virtualization
3D gaming
BCI and AI
SDN
Five Senses
Smell
Hear
Sight
Taste
Touch
FSO communication
Underwater communication

FIG. 7

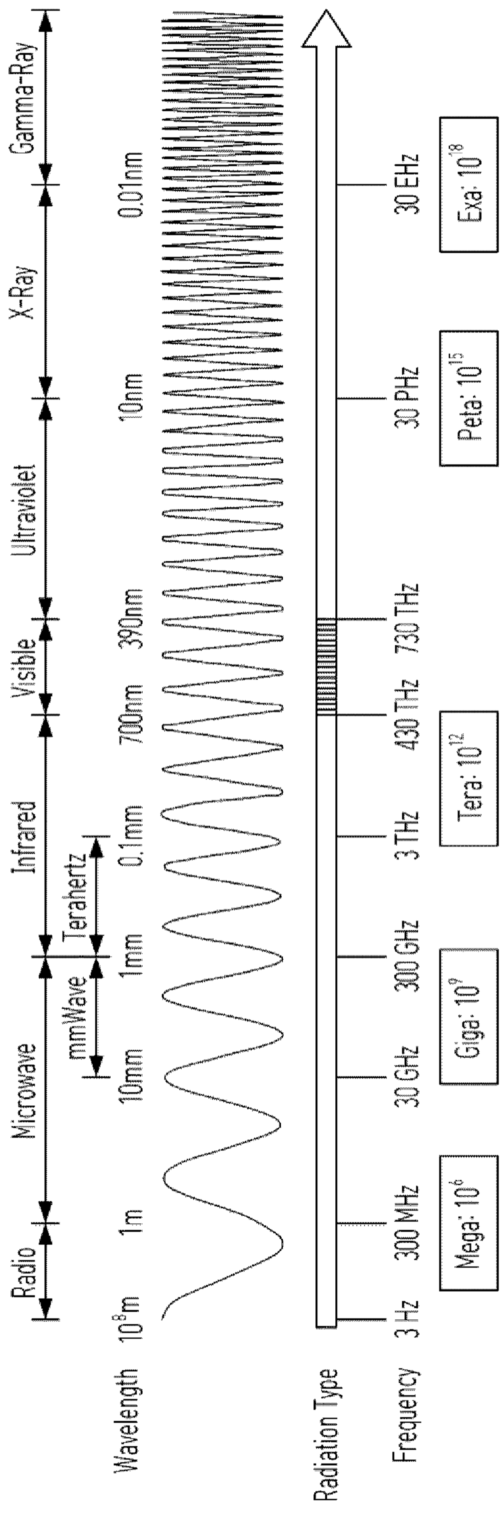
Wavelength
10⁸m
1m
10mm
1mm
0.1mm
700nm
390nm
10nm
0.01nm
Radio
Microwave
mmWave
Terahertz
Infrared
Visible
Ultraviolet
X-Ray
Gamma-Ray
Radiation Type
Frequency
3 Hz
300 MHz
30 GHz
300 GHz
3 THz
430 THz
730 THz
30 PHz
30 EHz
Mega: 10⁶
Giga: 10⁹
Tera: 10¹²
Peta: 10¹⁵
Exa: 10¹⁸

FIG. 8

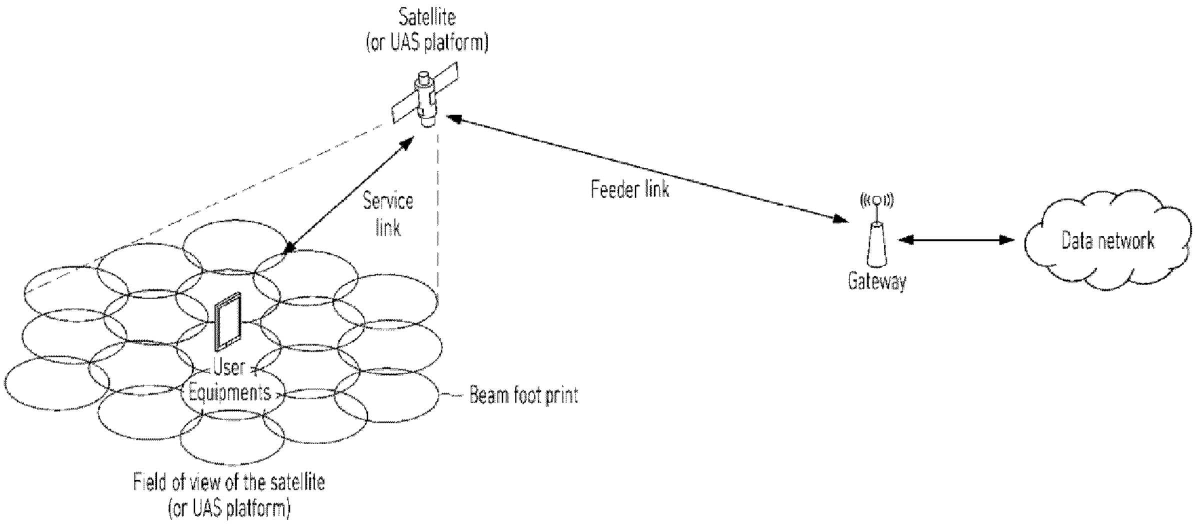
Satellite
(or UAS platform)
Service
link
Feeder link
Gateway
Data network
User
Equipments
Beam foot print
Field of view of the satellite
(or UAS platform)

FIG. 9

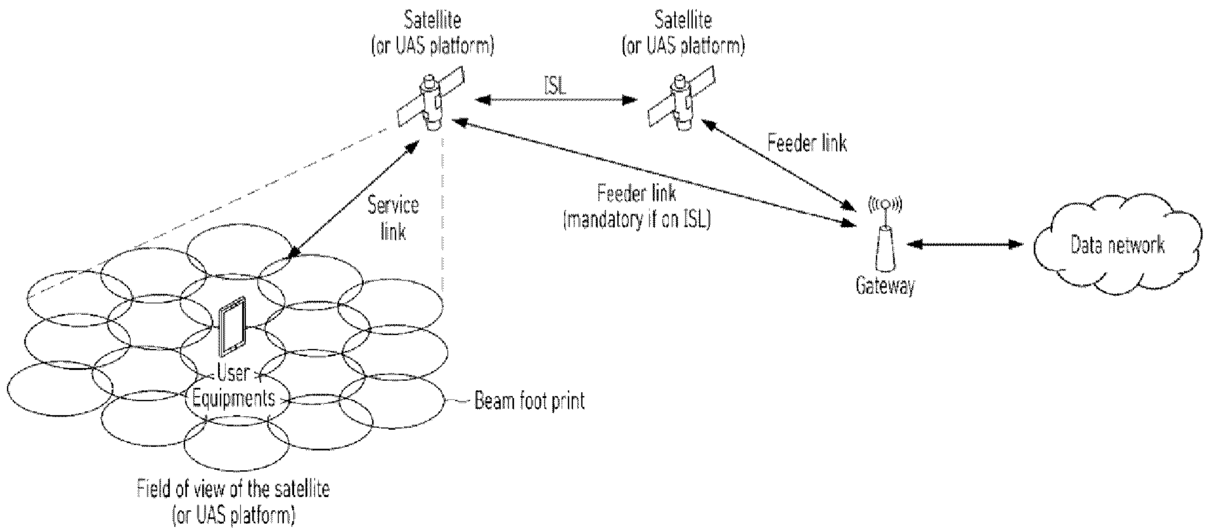
Satellite
(or UAS platform)
ISL
Satellite
(or UAS platform)
Feeder link
Service
link
Feeder link
(mandatory if on ISL)
Gateway
Data network
User
Equipments
Beam foot print
Field of view of the satellite
(or UAS platform)

FIG. 10

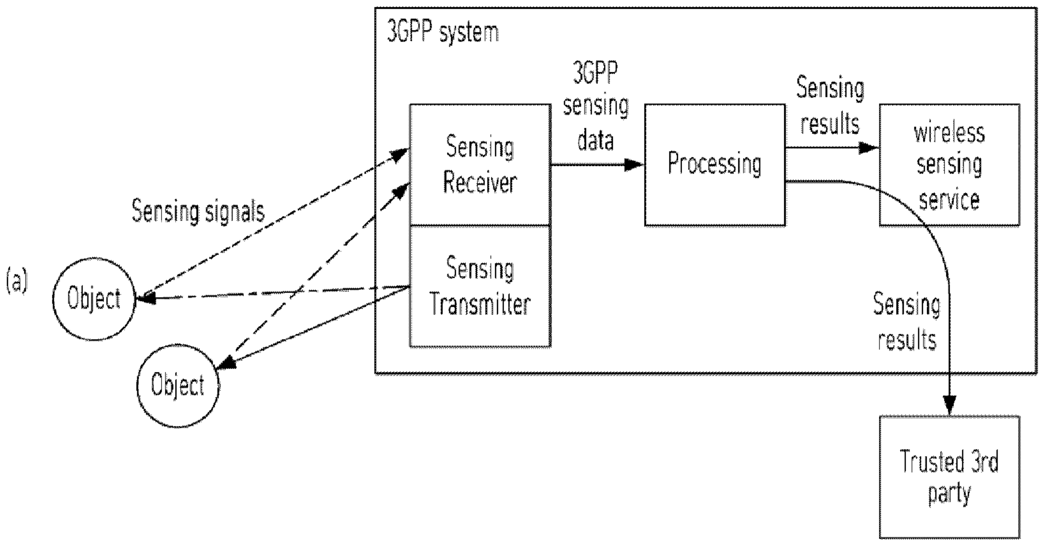
(a)
3GPP system
Sensing Receiver
Sensing Transmitter
3GPP sensing data
Processing
Sensing results
wireless sensing service
Sensing signals
Object
Object
Sensing results
Trusted 3rd party

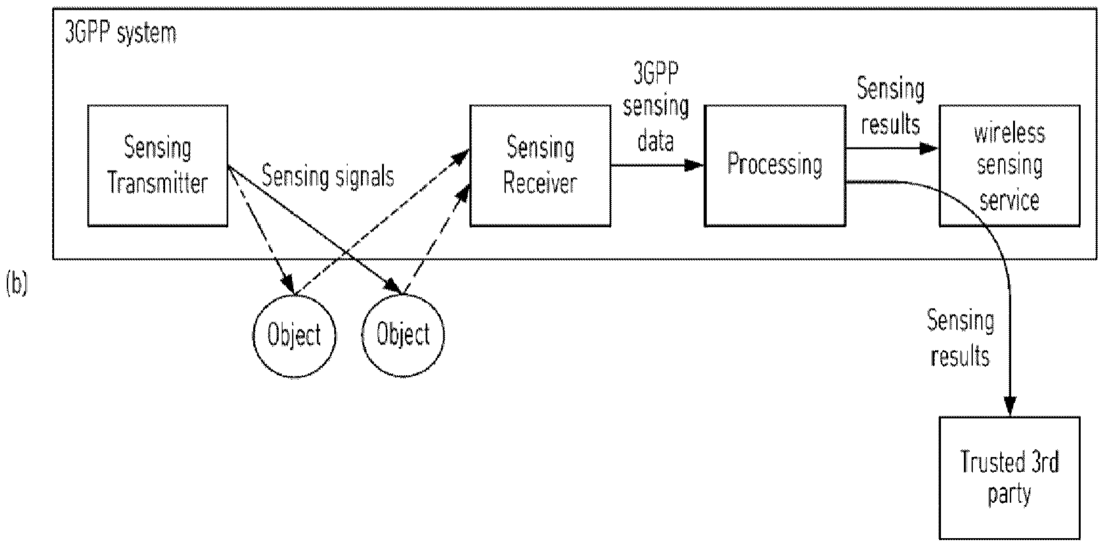
(b)
3GPP system
Sensing Transmitter
Sensing signals
Sensing Receiver
3GPP sensing data
Processing
Sensing results
wireless sensing service
Object
Object
Sensing results
Trusted 3rd party

FIG. 11

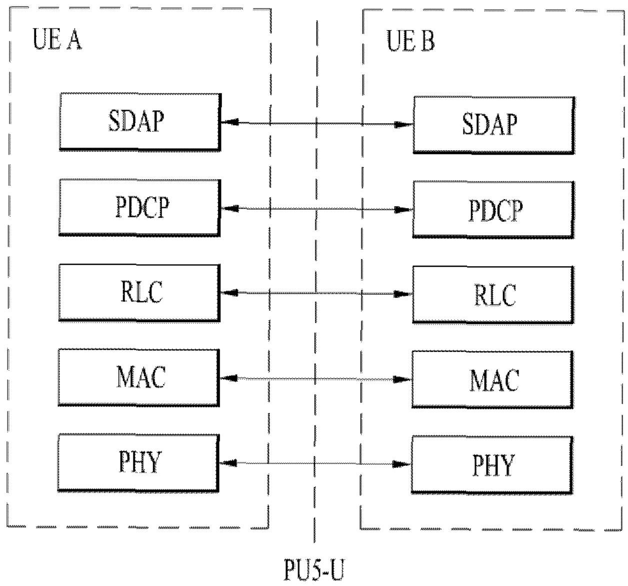
UE A
SDAP
PDCP
RLC
MAC
PHY
UE B
SDAP
PDCP
RLC
MAC
PHY
PU5-U

(a)

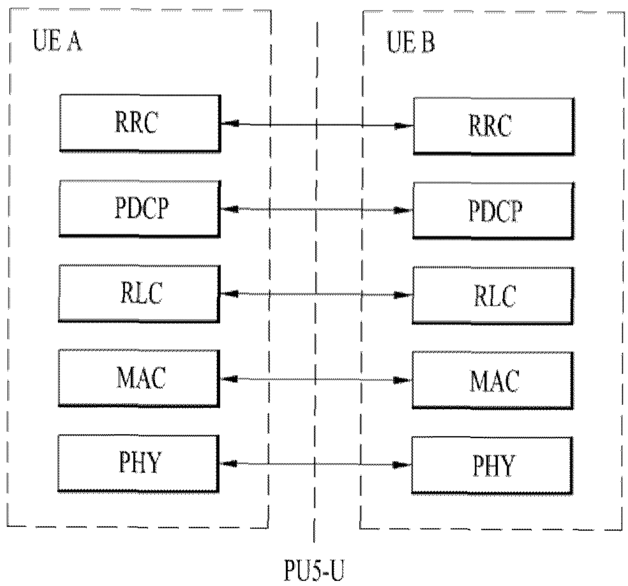
UE A
RRC
PDCP
RLC
MAC
PHY
UE B
RRC
PDCP
RLC
MAC
PHY
PU5-U

(b)

FIG. 12

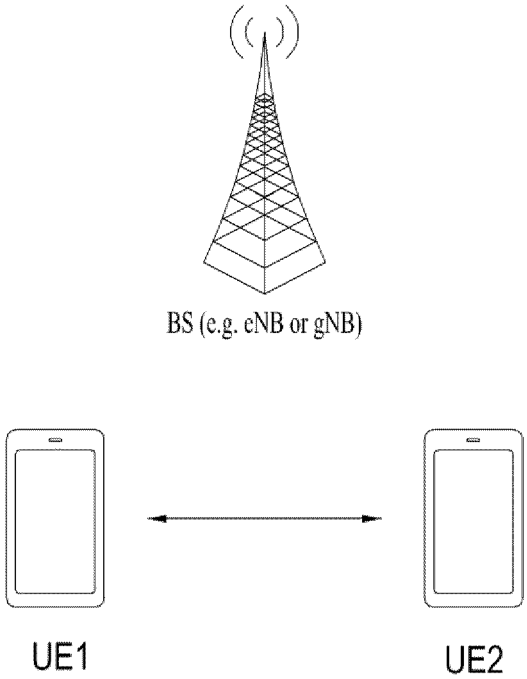
BS (e.g. eNB or gNB)
UE1
UE2

FIG. 13

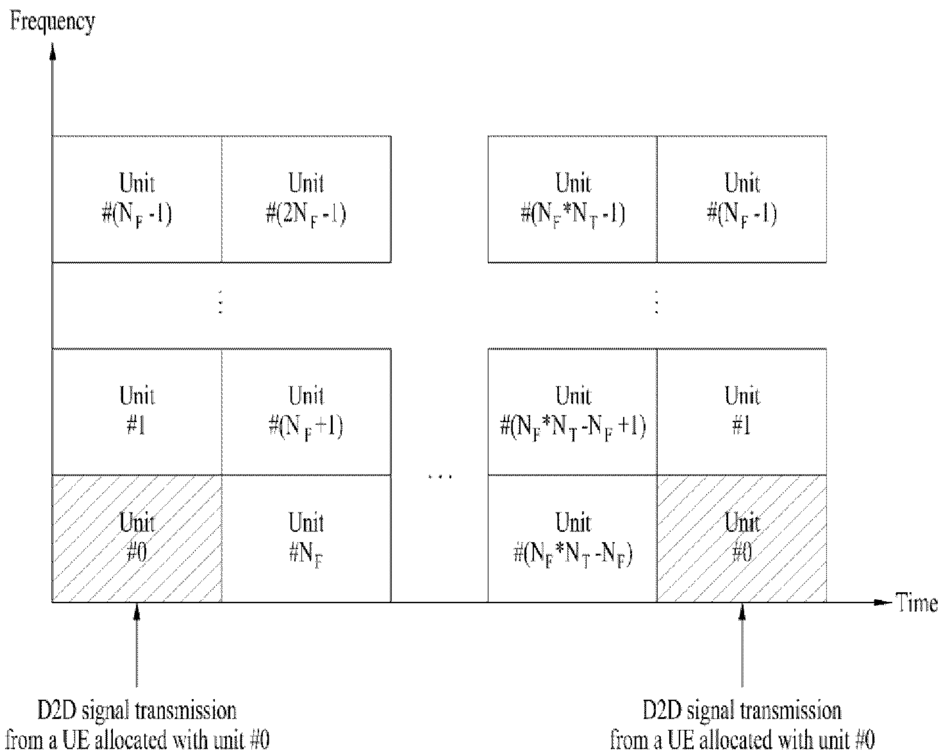
Frequency
Unit #($N_F$-1)
Unit #($2N_F$-1)
Unit #($N_F$*$N_T$-1)
Unit #($N_F$-1)
Unit #1
Unit #($N_F$+1)
Unit #($N_F$*$N_T$-$N_F$+1)
Unit #1
Unit #0
Unit #$N_F$
Unit #($N_F$*$N_T$-$N_F$)
Unit #0
Time
D2D signal transmission from a UE allocated with unit #0
D2D signal transmission from a UE allocated with unit #0

FIG. 14

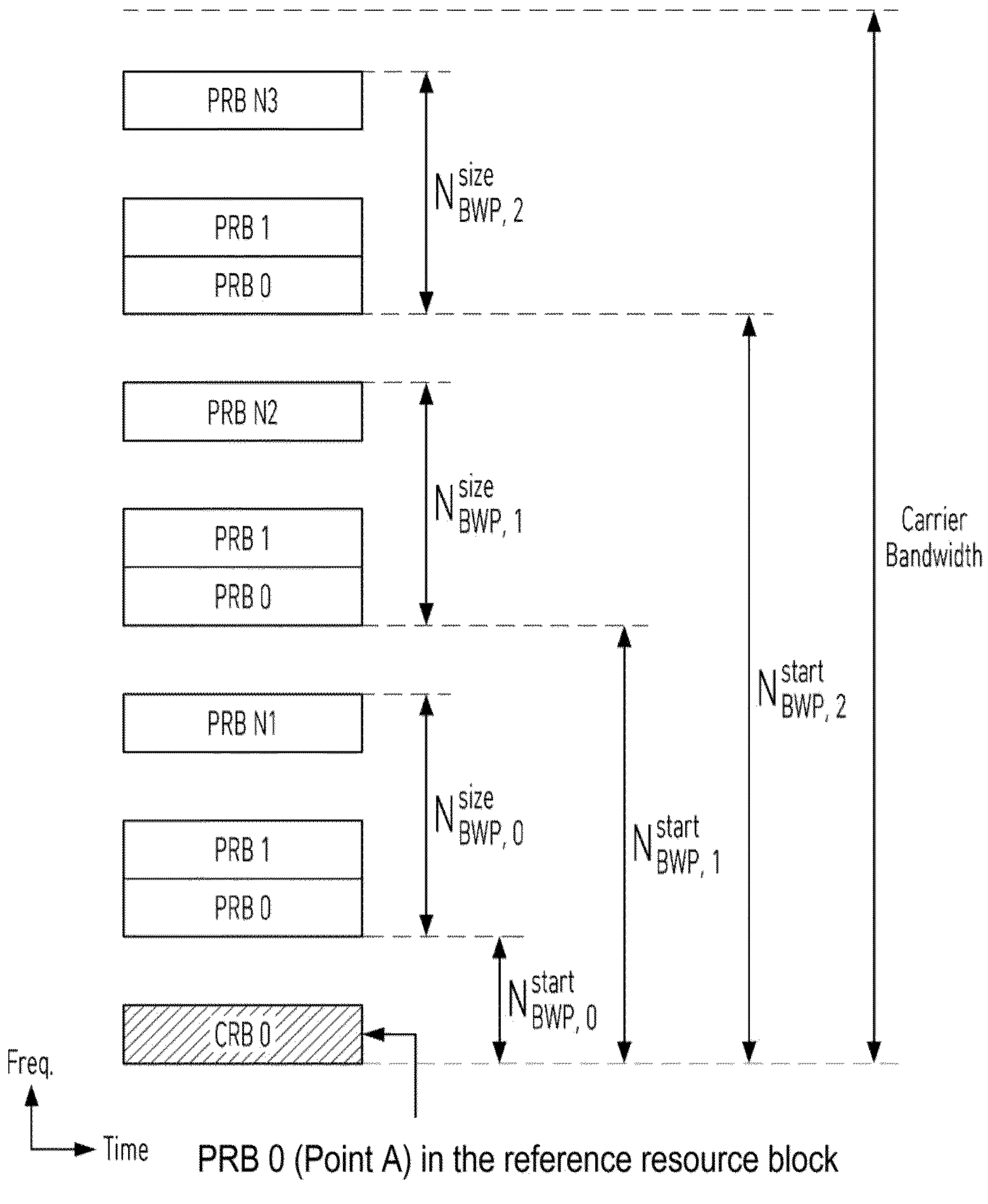
PRB N3
PRB 1
PRB 0
PRB N2
PRB 1
PRB 0
PRB N1
PRB 1
PRB 0
CRB 0
$N^{size}_{BWP,2}$
$N^{size}_{BWP,1}$
$N^{size}_{BWP,0}$
$N^{start}_{BWP,0}$
$N^{start}_{BWP,1}$
$N^{start}_{BWP,2}$
Carrier Bandwidth
Freq.
Time
PRB 0 (Point A) in the reference resource block

FIG. 15

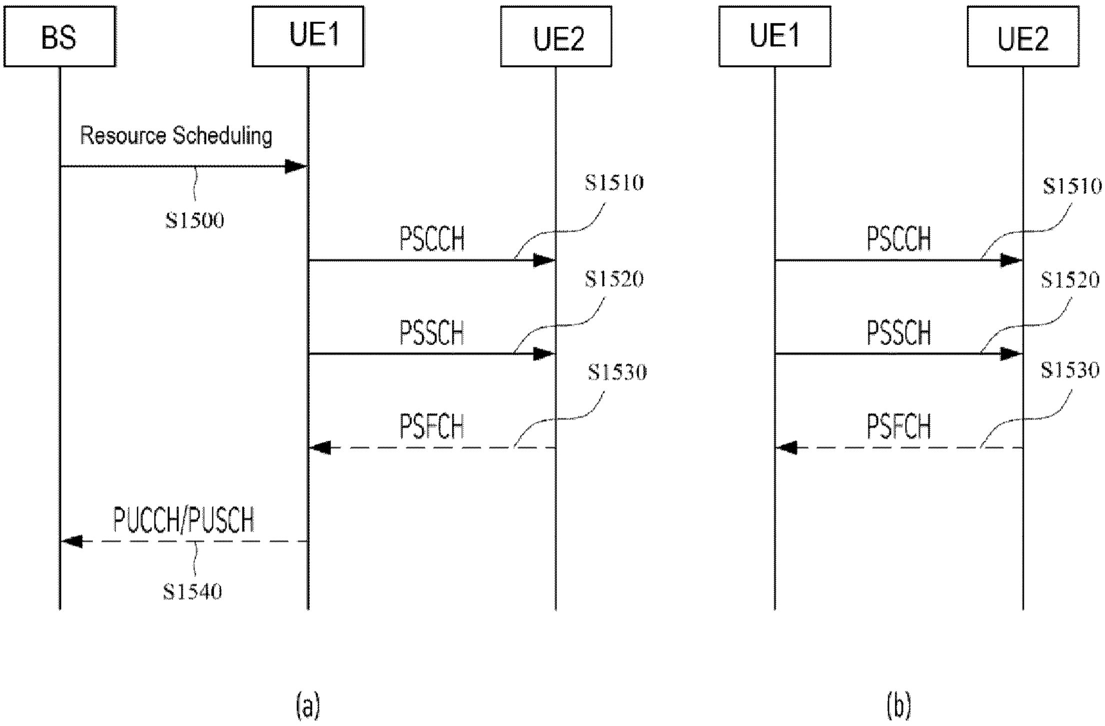
BS
UE1
UE2
Resource Scheduling
S1500
S1510
PSCCH
S1520
PSSCH
S1530
PSFCH
PUCCH/PUSCH
S1540
(a)
UE1
UE2
S1510
PSCCH
S1520
PSSCH
S1530
PSFCH
(b)

FIG. 16

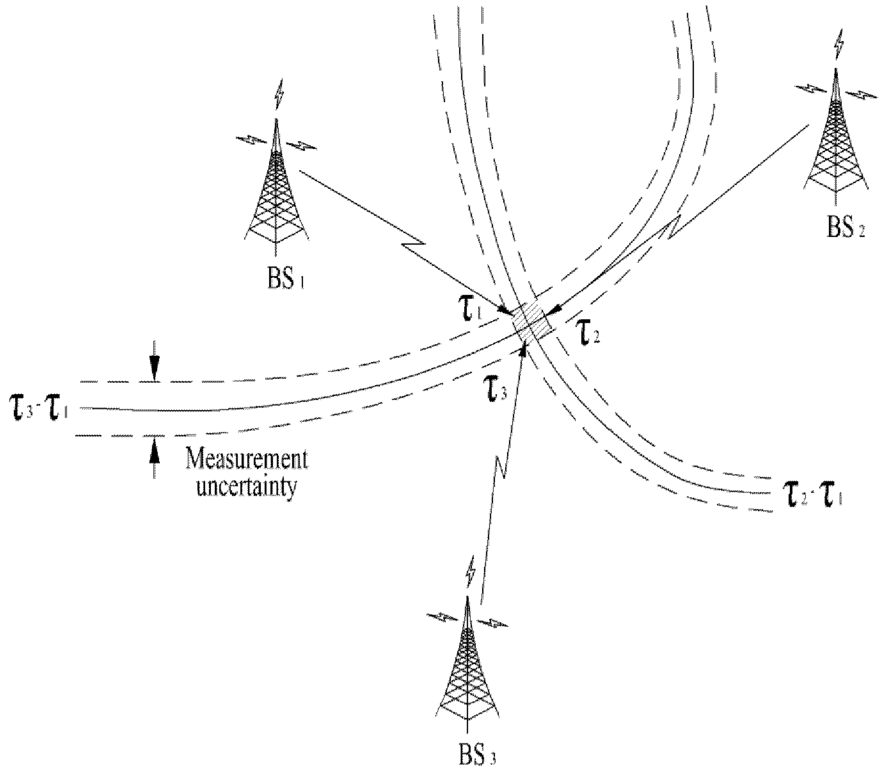
BS1
BS2
BS3
τ1
τ2
τ3
τ3-τ1
τ2-τ1
Measurement uncertainty

FIG. 17

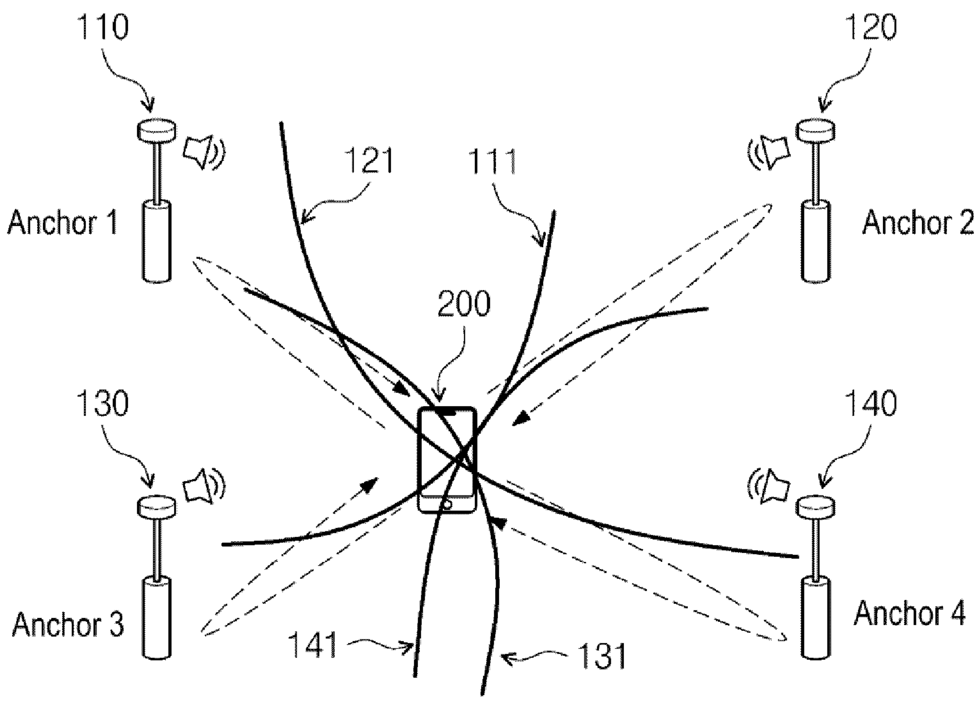
110
120
130
140
Anchor 1
Anchor 2
Anchor 3
Anchor 4
121
111
200
141
131

FIG. 18

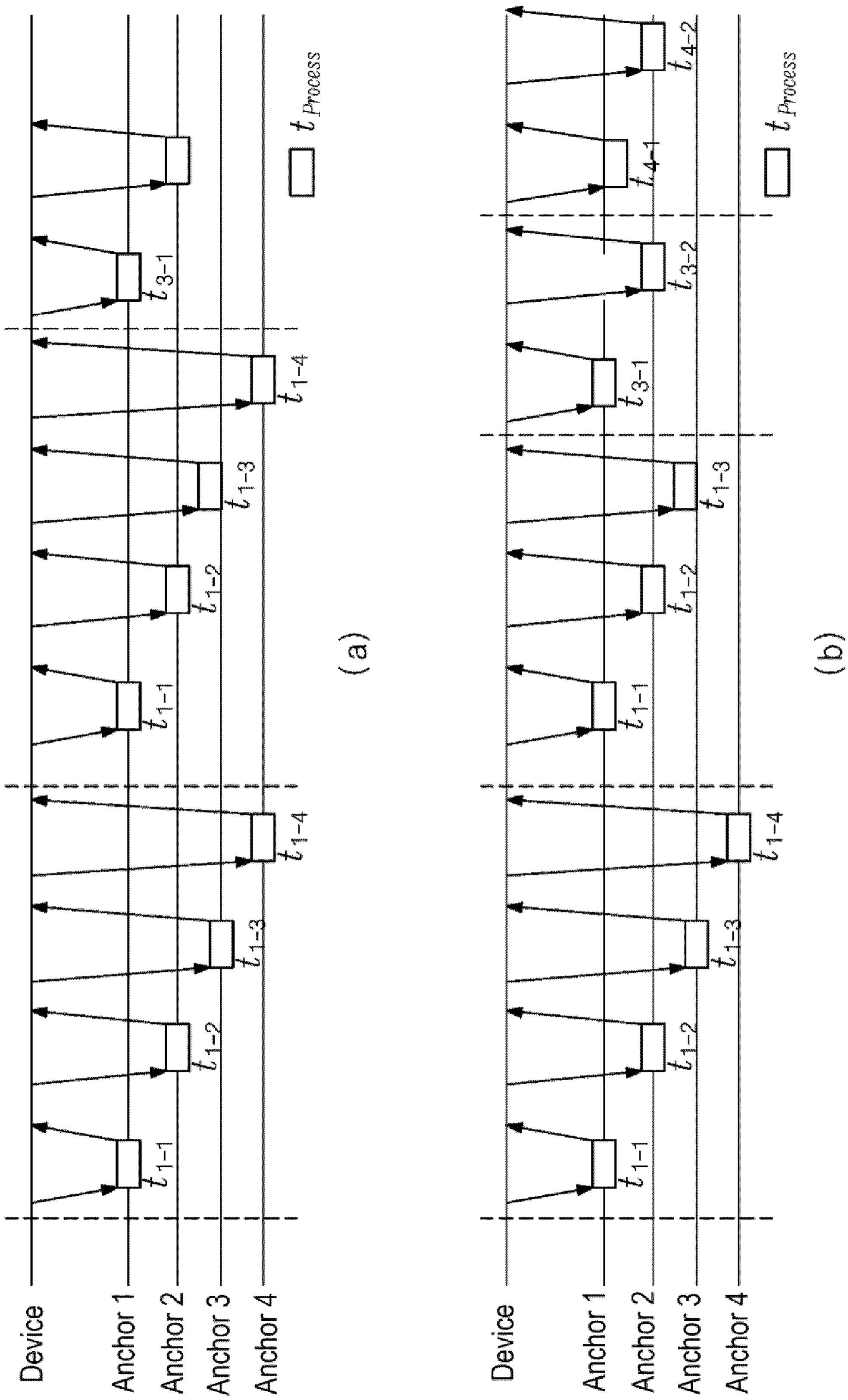
Device
Anchor 1
Anchor 2
Anchor 3
Anchor 4
$t_{1-1}$
$t_{1-2}$
$t_{1-3}$
$t_{1-4}$
$t_{3-1}$
$t_{3-2}$
$t_{4-1}$
$t_{4-2}$
$t_{Process}$
(a)
(b)

FIG. 19

(a)

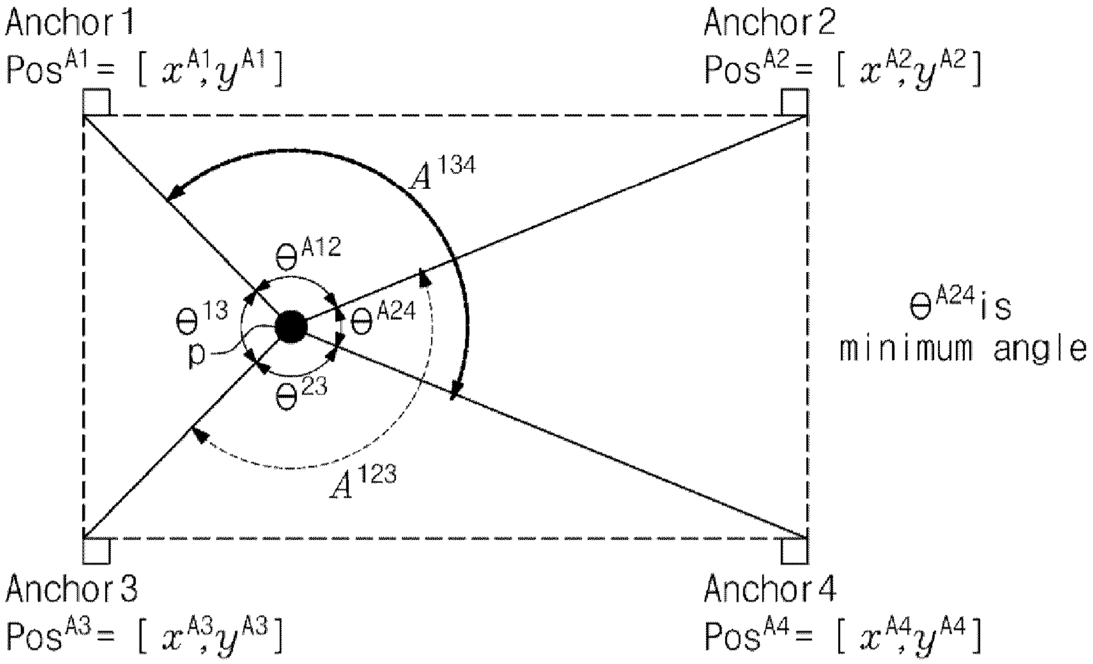
Anchor 1
Pos^A1 = [ x^A1, y^A1 ]
Anchor 2
Pos^A2 = [ x^A2, y^A2 ]
A^134
Θ^A12
Θ^13
Θ^A24
p
Θ^23
A^123
Θ^A24 is minimum angle
Anchor 3
Pos^A3 = [ x^A3, y^A3 ]
Anchor 4
Pos^A4 = [ x^A4, y^A4 ]

(b)

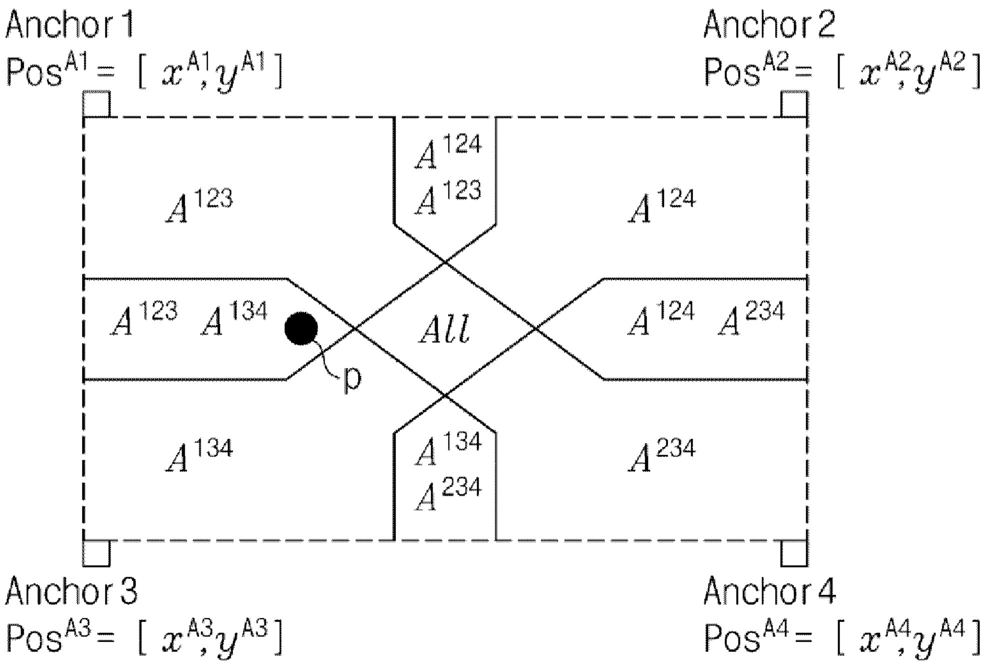
Anchor 1
Pos^A1 = [ x^A1, y^A1 ]
Anchor 2
Pos^A2 = [ x^A2, y^A2 ]
A^124
A^123
A^123
A^124
A^123 A^134
All
A^124 A^234
p
A^134
A^134
A^234
A^234
Anchor 3
Pos^A3 = [ x^A3, y^A3 ]
Anchor 4
Pos^A4 = [ x^A4, y^A4 ]

FIG. 20

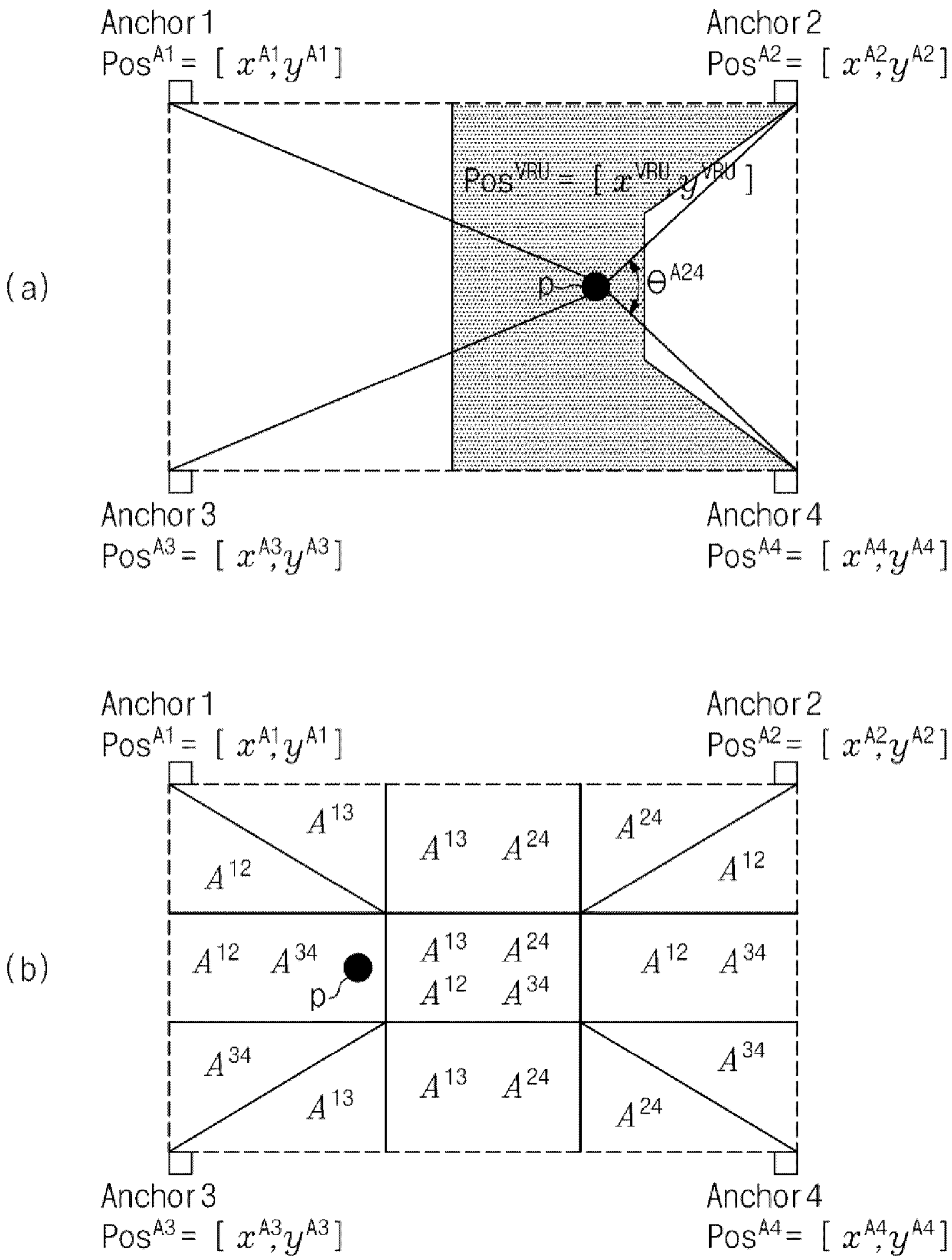
(a)
Anchor 1
$Pos^{A1} = [x^{A1}, y^{A1}]$
Anchor 2
$Pos^{A2} = [x^{A2}, y^{A2}]$
$Pos^{VRU} = [x^{VRU}, y^{VRU}]$
p
$\Theta^{A24}$
Anchor 3
$Pos^{A3} = [x^{A3}, y^{A3}]$
Anchor 4
$Pos^{A4} = [x^{A4}, y^{A4}]$
(b)
Anchor 1
$Pos^{A1} = [x^{A1}, y^{A1}]$
Anchor 2
$Pos^{A2} = [x^{A2}, y^{A2}]$
$A^{13}$ $A^{12}$
$A^{13}$ $A^{24}$
$A^{24}$ $A^{12}$
$A^{12}$ $A^{34}$
p
$A^{13}$ $A^{24}$ $A^{12}$ $A^{34}$
$A^{12}$ $A^{34}$
$A^{34}$ $A^{13}$
$A^{13}$ $A^{24}$
$A^{34}$ $A^{24}$
Anchor 3
$Pos^{A3} = [x^{A3}, y^{A3}]$
Anchor 4
$Pos^{A4} = [x^{A4}, y^{A4}]$

FIG. 21

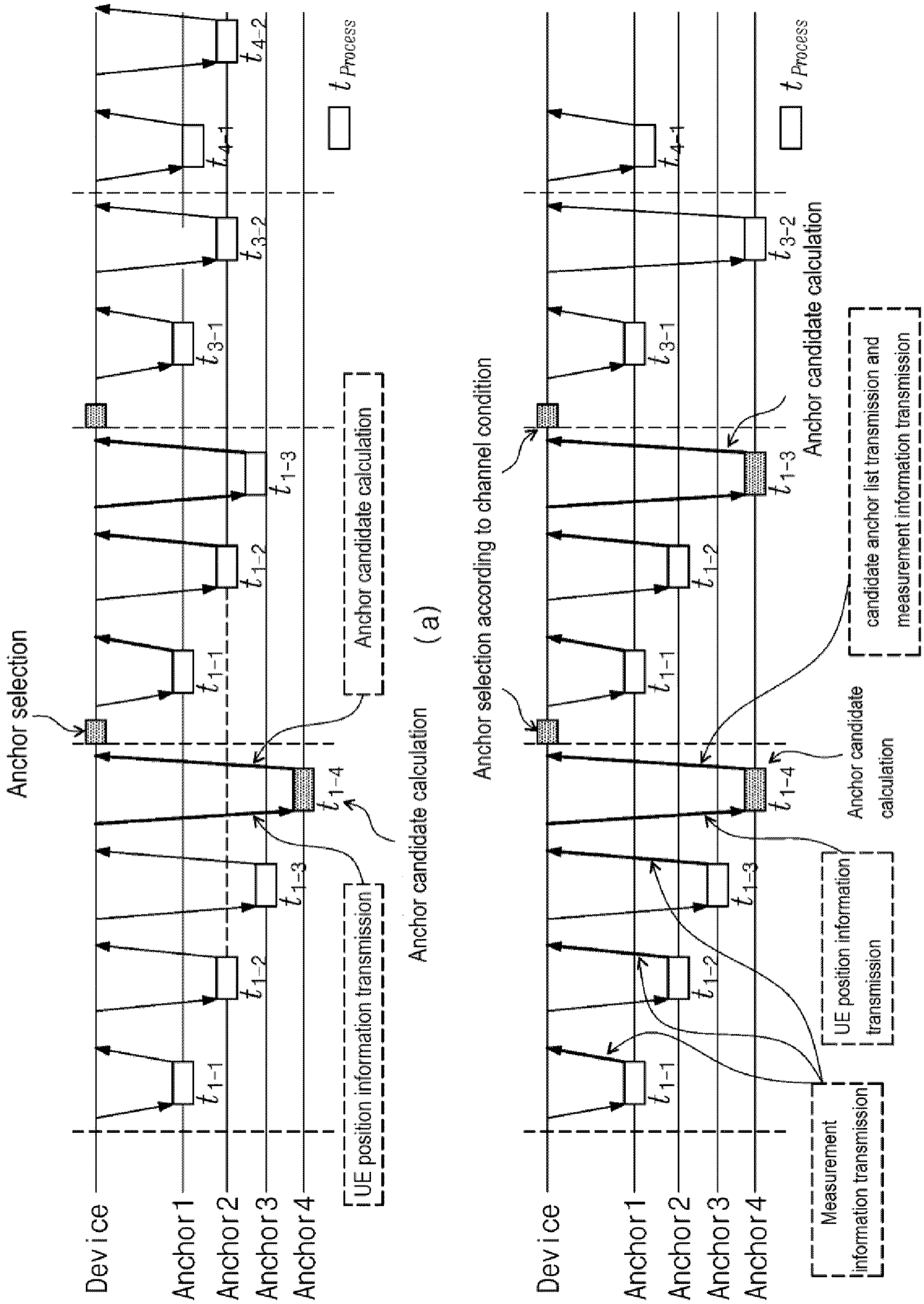

Device
Anchor 1
Anchor 2
Anchor 3
Anchor 4
Anchor selection
Anchor candidate calculation
UE position information transmission
Anchor candidate calculation
(a)
$t_{1-1}$
$t_{1-2}$
$t_{1-3}$
$t_{1-4}$
$t_{3-1}$
$t_{3-2}$
$t_{4-1}$
$t_{4-2}$
$t_{Process}$
Anchor selection according to channel condition
Anchor candidate calculation
Anchor candidate calculation
UE position information transmission
Measurement information transmission
candidate anchor list transmission and measurement information transmission
(b)

FIG. 22

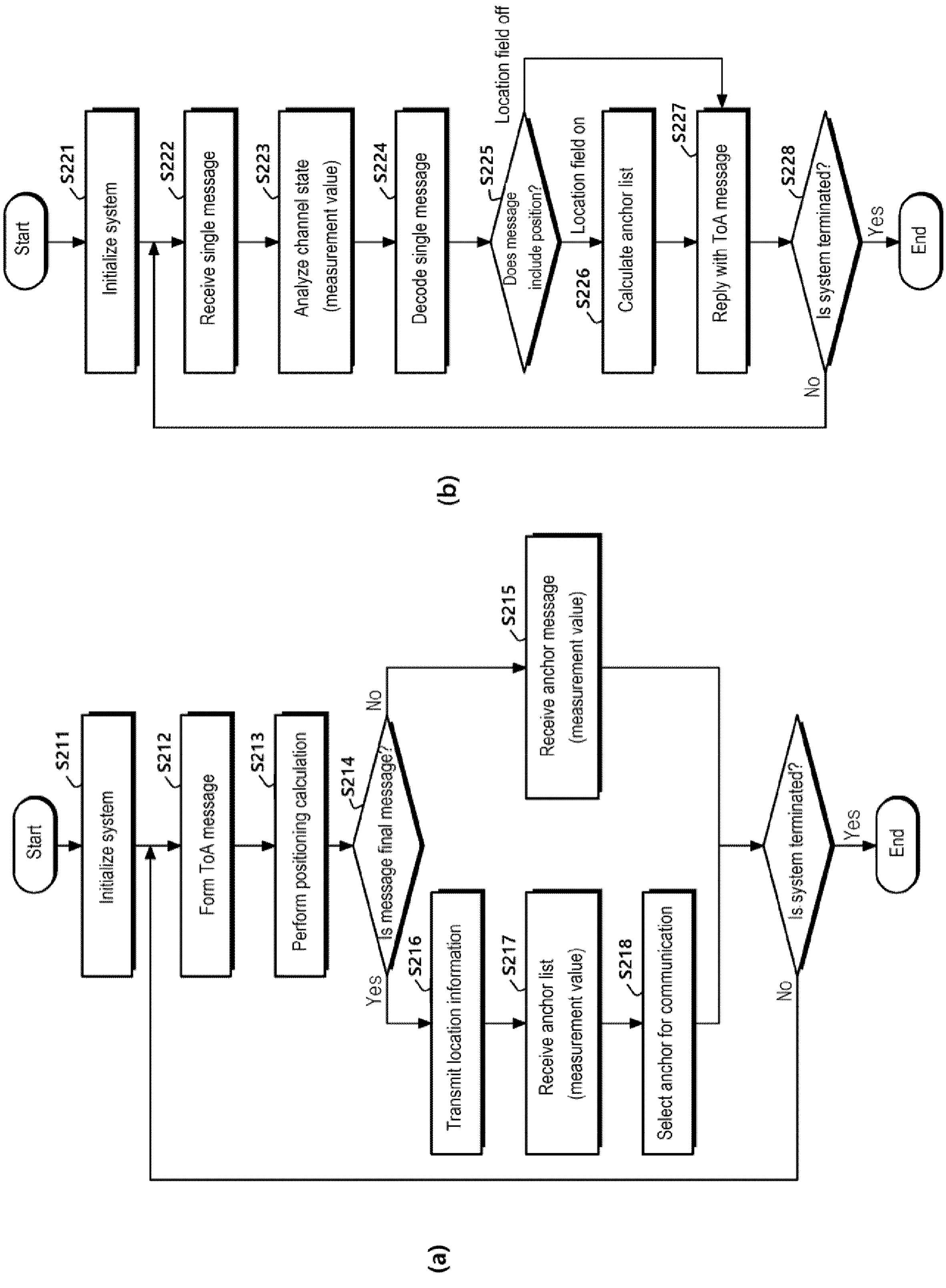
Start
Initialize system
S221
Receive single message
S222
Analyze channel state (measurement value)
S223
Decode single message
S224
Does message include position?
S225
Location field off
Location field on
Calculate anchor list
S226
Reply with ToA message
S227
Is system terminated?
S228
Yes
No
End
(b)
Start
Initialize system
S211
Form ToA message
S212
Perform positioning calculation
S213
Is message final message?
S214
No
Yes
Receive anchor message (measurement value)
S215
Transmit location information
S216
Receive anchor list (measurement value)
S217
Select anchor for communication
S218
Is system terminated?
Yes
No
End
(a)

FIG. 23

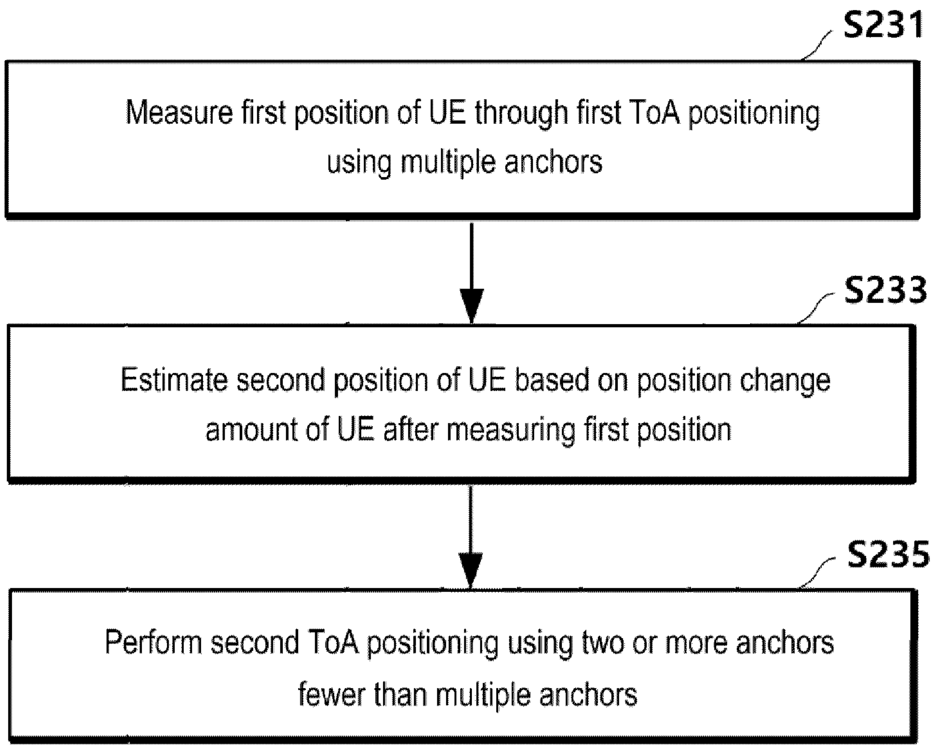
S231
Measure first position of UE through first ToA positioning using multiple anchors
S233
Estimate second position of UE based on position change amount of UE after measuring first position
S235
Perform second ToA positioning using two or more anchors fewer than multiple anchors

FIG. 24

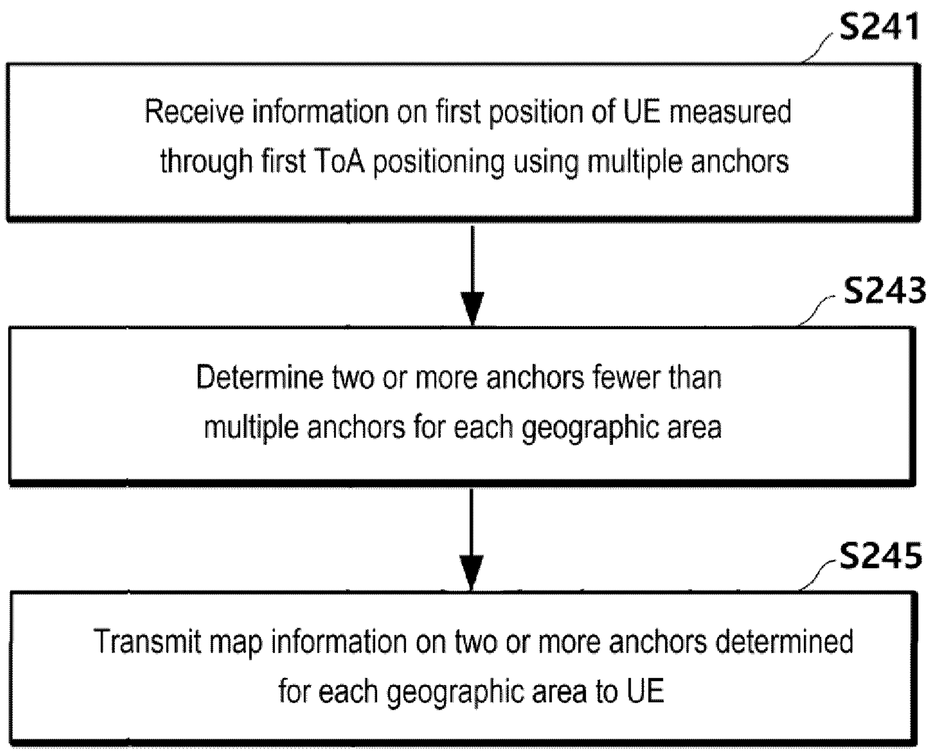
S241
Receive information on first position of UE measured through first ToA positioning using multiple anchors
S243
Determine two or more anchors fewer than multiple anchors for each geographic area
S245
Transmit map information on two or more anchors determined for each geographic area to UE

FIG. 25

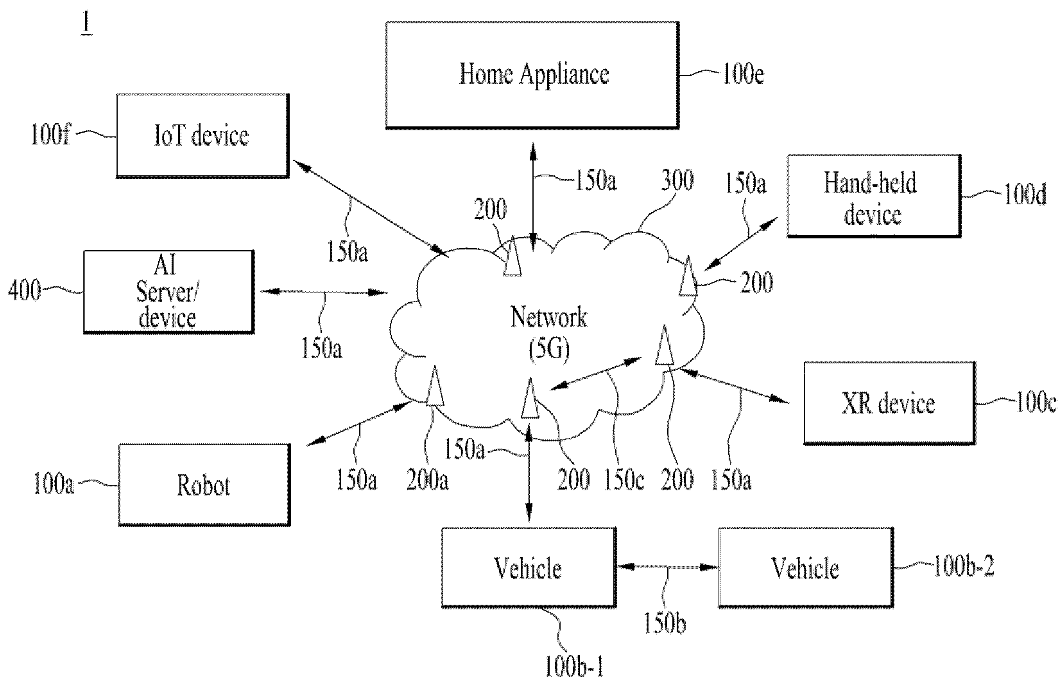
1
Home Appliance
100e
100f
IoT device
150a
300
150a
Hand-held device
100d
200
150a
400
AI Server/ device
200
150a
Network (5G)
XR device
100c
150a
100a
Robot
150a
200a
200
150c
200
150a
Vehicle
Vehicle
100b-2
150b
100b-1

FIG. 26

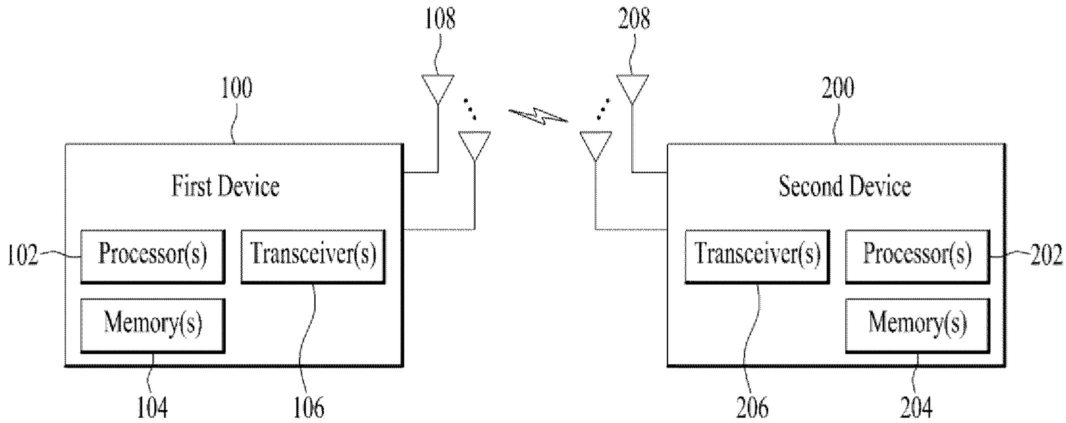
108
208
100
200
First Device
Second Device
102
Processor(s)
Transceiver(s)
Transceiver(s)
Processor(s)
202
Memory(s)
Memory(s)
104
106
206
204

FIG. 27

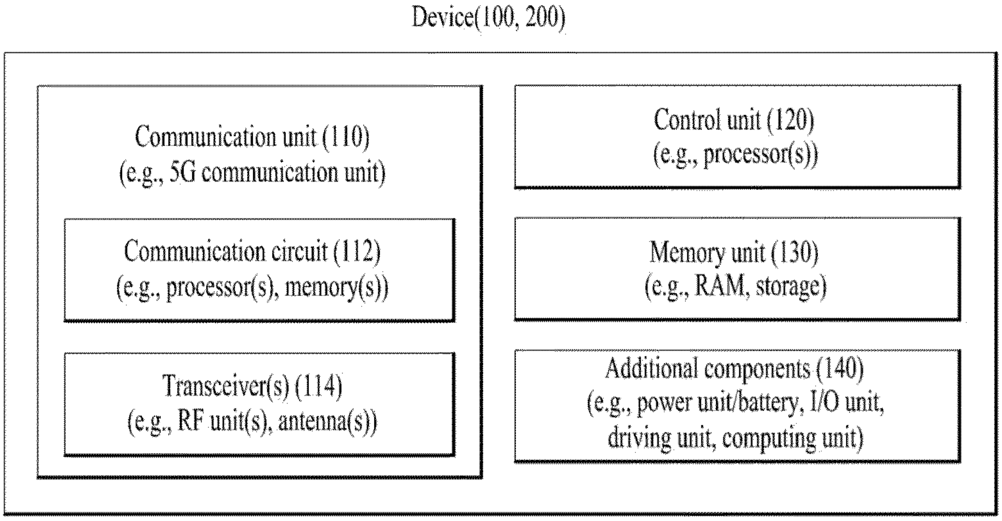
Device(100, 200)
Communication unit (110)
(e.g., 5G communication unit)
Communication circuit (112)
(e.g., processor(s), memory(s))
Transceiver(s) (114)
(e.g., RF unit(s), antenna(s))
Control unit (120)
(e.g., processor(s))
Memory unit (130)
(e.g., RAM, storage)
Additional components (140)
(e.g., power unit/battery, I/O unit,
driving unit, computing unit)

FIG. 28

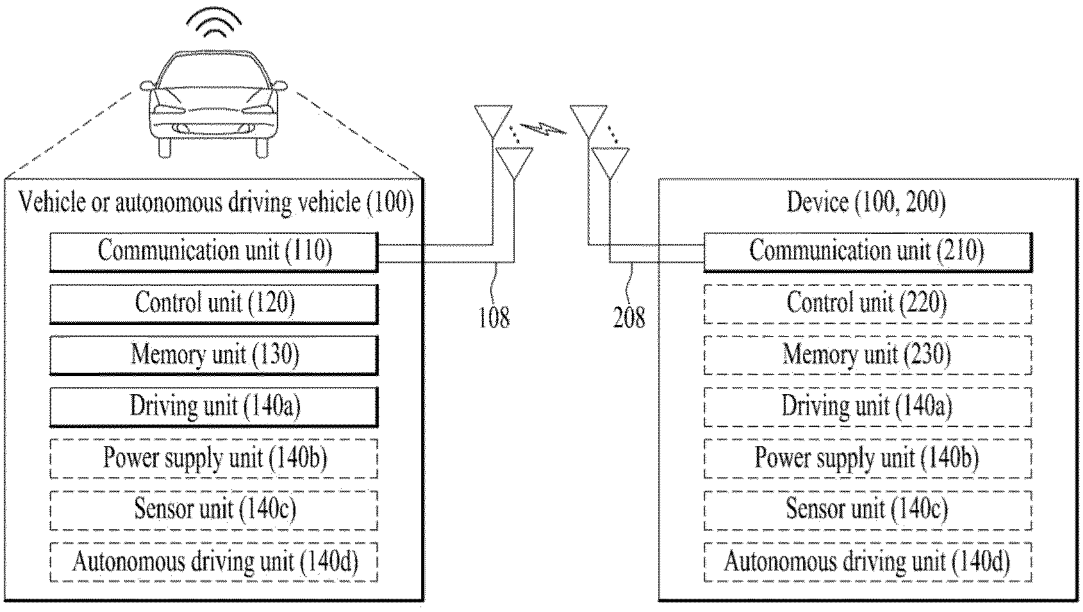
Vehicle or autonomous driving vehicle (100)
Communication unit (110)
Control unit (120)
Memory unit (130)
Driving unit (140a)
Power supply unit (140b)
Sensor unit (140c)
Autonomous driving unit (140d)
108
208
Device (100, 200)
Communication unit (210)
Control unit (220)
Memory unit (230)
Driving unit (140a)
Power supply unit (140b)
Sensor unit (140c)
Autonomous driving unit (140d)

## INTERNATIONAL SEARCH REPORT

International application No.
**PCT/KR2024/006286**

**A. CLASSIFICATION OF SUBJECT MATTER**

**G01S 5/02**(2010.01)i; **H04W 4/40**(2018.01)i

According to International Patent Classification (IPC) or to both national classification and IPC

**B. FIELDS SEARCHED**

Minimum documentation searched (classification system followed by classification symbols)

G01S 5/02(2010.01); G01S 13/931(2020.01); G01S 3/808(2006.01); G01S 5/06(2006.01); H04W 64/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: ToA(Time of Arrival), 위치 측정(positioning), 감소(reduction), 위치 변화(change of location), 각도(angle)

**C. DOCUMENTS CONSIDERED TO BE RELEVANT**

| Category* | Citation of document, with indication, where appropriate, of the relevant passages | Relevant to claim No. |
|---|---|---|
| A | JP 2005-274364 A (HITACHI LTD. et al.) 06 October 2005 (2005-10-06) See paragraph [0011] and figures 1-2. | 1-15 |
| A | KR 10-2019-0013264 A (ISYNAPSE CO., LTD.) 11 February 2019 (2019-02-11) See paragraphs [0021]-[0039], claim 2 and figures 3-9. | 1-15 |
| A | KR 10-2020-0111261 A (BEAUCHAMP, Bastien) 28 September 2020 (2020-09-28) See claims 1-4 and figures 1-7. | 1-15 |
| A | KR 10-2012-0012876 A (LG INNOTEK CO., LTD.) 13 February 2012 (2012-02-13) See claim 1 and figures 3-6. | 1-15 |
| A | KR 10-2009-0088190 A (INDUSTRY ACADEMIC COOPERATION FOUNDATION OF YEUNGNAM UNIVERSITY) 19 August 2009 (2009-08-19) See claim 1 and figures 3-5. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 August 2024** | **28 August 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/006286**

| Patent document cited in search report | Publication date (day/month/year) | Patent family member(s) | Publication date (day/month/year) |
|---|---|---|---|
| JP 2005-274364 A | 06 October 2005 | None | |
| KR 10-2019-0013264 A | 11 February 2019 | None | |
| KR 10-2020-0111261 A | 28 September 2020 | CN 112106126 A | 18 December 2020 |
| | | CN 112106126 B | 25 February 2022 |
| | | EP 3791376 A1 | 17 March 2021 |
| | | EP 3791376 B1 | 08 November 2023 |
| | | JP 2021-510857 A | 30 April 2021 |
| | | JP 7044804 B2 | 30 March 2022 |
| | | US 11062606 B2 | 13 July 2021 |
| | | US 11443633 B2 | 13 September 2022 |
| | | US 2021-0183249 A1 | 17 June 2021 |
| | | US 2021-0287547 A1 | 16 September 2021 |
| | | WO 2019-213763 A1 | 14 November 2019 |
| KR 10-2012-0012876 A | 13 February 2012 | KR 10-1695026 B1 | 10 January 2017 |
| | | KR 10-1723229 B1 | 05 April 2017 |
| | | KR 10-2011-0136522 A | 21 December 2011 |
| | | US 2011-0304506 A1 | 15 December 2011 |
| | | US 8576122 B2 | 05 November 2013 |
| KR 10-2009-0088190 A | 19 August 2009 | KR 10-0953435 B1 | 20 April 2010 |

Form PCT/ISA/210 (patent family annex) (July 2022)